# EUROPEAN PATENT APPLICATION

(11) **EP 4 694 002 A1**
(43) Date of publication of application: **11.02.2026**
(21) Application number: 24784159.6
(22) Date of filing: 28.03.2024
(51) Int. Cl.: H04L 5/00

(54) **METHOD AND APPARATUS USED IN NODE FOR WIRELESS COMMUNICATION**

(30) Priority: 03.04.2023 CN 202310355148
(71) Applicant: Apogee Networks, LLC, Dallas, TX 75201 (US)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2024/084344
(87) International publication number: WO 2024/208074

(57) **Abstract**

Disclosed in the present application are a method and apparatus used in a node for wireless communication. A first receiver receives a first information block, the first information block being used for indicating a first RS resource set, and the first RS resource set comprising one or more RS resources; and a first transmitter sends first channel information, wherein a first code is used for generating the first channel information, and the measurement for at least one RS resource in the first RS resource set is used for generating the input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier. According to the present application, the system implementation complexity is reduced, and the performance is improved.

## Description

### Technical Field

The present application relates to a transmission method and apparatus in a wireless communication system, in particular to a transmission method and apparatus for wireless signals in a wireless communication system supporting a cellular network.

### Background Art

In a traditional wireless communication, UE (User Equipment) reporting may comprise at least one of a variety of auxiliary information, such as CSI (Channel Status Information), auxiliary information related to beam management, and auxiliary information related to positioning, wherein the CSI comprises at least one of a CRI (CSI-RS Resource Indicator), an RI (Rank indicator), a PMI (Precoding Matrix Indicator), or a CQI (Channel quality indicator). Network equipment selects appropriate transmission parameters for UE according to the UE reporting, such as a resident cell, an MCS (Modulation and Coding Scheme), a TPMI (Transmitted Precoding Matrix Indicator), a TCI (Transmission Configuration Indication), etc. Furthermore, the UE reporting may be used for optimizing network parameters, such as better cell coverage, switching base stations on or off according to UE locations, etc. As the quantity of antennas increases, traditional PMI feedback ways bring a lot of redundant overhead. Therefore, in the NR R (Release) 18, CSI compression based on AI (Artificial Intelligence) or ML (Machine Learning) was set up.

### Summary of the Invention

The inventors have found through research that how to determine an identifier associated with a parameter group adopted by a code used for generating channel information is a key problem.

In response to the above problem, the present application discloses a solution. It should be noted that although a large number of embodiments of the present application are developed for AI/ML, the present application is also applicable to traditional solutions, such as those based on linear channel reconstruction. In particular, it should be considered that specific channel reconstruction algorithms are likely to be non-standardized or self-implemented by hardware equipment manufacturers. Furthermore, adopting a unified UE reporting solution can reduce the implementation complexity or improve the performance. In the absence of conflicts, embodiments and features in the embodiments in any node of the present application may be applied to any other node. In the absence of conflicts, the embodiments and features in the embodiments of the present application may be arbitrarily combined with each other.

As one embodiment, the interpretation of the terminology in the present application refers to definitions of TS36 series of a standard protocol of 3GPP.

As one embodiment, the interpretation of the terminology in the present application refers to definitions of TS38 series of a standard protocol of 3GPP.

As one embodiment, the interpretation of the terminology in the present application refers to definitions of TS37 series of a standard protocol of 3GPP.

As one embodiment, the interpretation of the terminology in the present application refers to definitions of a standard protocol of the IEEE (Institute of Electrical and Electronics Engineers).

The present application discloses a method used in a first node for wireless communication, characterized by comprising:
receiving a first information block, the first information block being used for indicating a first RS resource set, and the first RS resource set comprising one or more RS resources; and
sending first channel information,
wherein a first code is used for generating the first channel information, and the measurement for at least one RS resource in the first RS resource set is used for generating the input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

As one embodiment, the problem to be solved by the present application comprises: how to determine which identifier or identifiers a parameter group adopted by a code used for generating channel information is associated with.

As one embodiment, the benefits of the above method comprise: a coding method for generating channel information is flexibly adjusted.

As one embodiment, the benefits of the above method comprise: by selecting a parameter group adopted by a code associated with an appropriate identifier, more accurate channel information may be obtained, thereby improving the transmission reliability and increasing the system capacity.

As one embodiment, the benefits of the above method comprise: the system implementation complexity is reduced.

As one embodiment, the benefits of the above method comprise: the system overhead for UE reporting is reduced.

According to one aspect of the present application, it is characterized in that any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with only one of a first identifier or a second identifier.

According to one aspect of the present application, it is characterized in that any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with the first identifier and the second identifier.

According to one aspect of the present application, it is characterized in that two of the J parameter groups are obtained by training based on the same training dataset, and the two of the J parameter groups that are obtained by training based on the same training dataset are associated with the first identifier and the second identifier respectively.

According to one aspect of the present application, it is characterized in that a second parameter group and a third parameter group are obtained by training based on two different training datasets respectively, and the second parameter group and the third parameter group are two of the J parameter groups; and the two training datasets on which the second parameter group and the third parameter group are based correspond to at least one RS resource in the same RS resource set.

According to one aspect of the present application, it is characterized in that the first channel information is associated with only one or both of the first identifier or the second identifier, the parameter group adopted by the first code depends on an identifier associated with the first channel information, and the identifier associated with the first channel information comprises only one or both of the first identifier or the second identifier.

According to one aspect of the present application, it is characterized in that the training of at least one of the J parameter groups is executed at the first node.

According to one aspect of the present application, it is characterized in that the training of at least one of the J parameter groups is executed by the sender of the first information block.

According to one aspect of the present application, it is characterized in that an executor of the training of at least one of the J parameter groups depends on a training type of at least one of the J parameter groups.

According to one aspect of the present application, it is characterized in that the parameter group adopted by the first code depends on the first RS resource set.

According to one aspect of the present application, it is characterized by comprising:
receiving a second information block,
wherein an identifier with which the parameter group adopted by the first code is associated comprises only one or both of the first identifier or the second identifier, and the second information block is used for indicating the identifier with which the parameter group adopted by the first code is associated.

The present application discloses a method used in a second node for wireless communication, comprising:
sending a first information block, the first information block being used for indicating a first RS resource set, and the first RS resource set comprising one or more RS resources; and
receiving first channel information,
wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

According to one aspect of the present application, it is characterized in that any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with only one of a first identifier or a second identifier.

According to one aspect of the present application, it is characterized in that any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with the first identifier and the second identifier.

According to one aspect of the present application, it is characterized in that two of the J parameter groups are obtained by training based on the same training dataset, and the two of the J parameter groups that are obtained by training based on the same training dataset are associated with the first identifier and the second identifier respectively.

According to one aspect of the present application, it is characterized in that a second parameter group and a third parameter group are obtained by training based on two different training datasets respectively, and the second parameter group and the third parameter group are two of the J parameter groups; and the two training datasets on which the second parameter group and the third parameter group are based correspond to at least one RS resource in the same RS resource set.

According to one aspect of the present application, it is characterized in that the first channel information is associated with only one or both of the first identifier or the second identifier, the parameter group adopted by the first code depends on an identifier associated with the first channel information, and the identifier associated with the first channel information comprises only one or both of the first identifier or the second identifier.

According to one aspect of the present application, it is characterized in that the training of at least one of the J parameter groups is executed by the recipient of the first information block.

According to one aspect of the present application, it is characterized in that the training of at least one of the J parameter groups is executed at the second node.

According to one aspect of the present application, it is characterized in that an executor of the training of at least one of the J parameter groups depends on a training type of at least one of the J parameter groups.

According to one aspect of the present application, it is characterized in that the parameter group adopted by the first code depends on the first RS resource set.

According to one aspect of the present application, it is characterized by comprising:
sending a second information block,
wherein an identifier with which the parameter group adopted by the first code is associated comprises only one or both of the first identifier or the second identifier, and the second information block is used for indicating the identifier with which the parameter group adopted by the first code is associated.

The present application discloses a first node device for wireless communication, characterized by comprising:
a first receiver receiving a first information block, the first information block being used for indicating a first RS resource set, and the first RS resource set comprising one or more RS resources; and
a first transmitter sending first channel information,
wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

The present application discloses a second node device for wireless communication, characterized by comprising:
a second transmitter sending a first information block, the first information block being used for indicating a first RS resource set, and the first RS resource set comprising one or more RS resources; and
a second receiver receiving first channel information,
wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

As one embodiment, compared with the traditional solution, the present application has the following advantages:
- a coding method for generating channel information is flexibly adjusted;
- more accurate channel information may be obtained by selecting a parameter group adopted by a code associated with an appropriate identifier;
- the transmission reliability and the system capacity are improved;
- the system implementation complexity is reduced; and
- the system overhead for UE reporting is reduced.

### Brief Description of the Drawings

Other features, objects and advantages of the present application will become more apparent by reading the detailed description of non-limiting embodiments with reference to the following drawings:
FIG. 1 shows a flowchart of a first information block and first channel information according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of a wireless transmission according to one embodiment of the present application;
FIGs. 6A-6B respectively show schematic diagrams of a first parameter group according to one embodiment of the present application;
FIG. 7 shows a schematic diagram of two of J parameter groups according to one embodiment of the present application;
FIG. 8 shows a schematic diagram of a second parameter group and a third parameter group according to one embodiment of the present application;
FIG. 9 shows a schematic diagram of first channel information being associated with a first identifier and a second identifier according to one embodiment of the present application;
FIGs. 10A-10F show schematic diagrams of an identifier associated with first channel information according to one embodiment of the present application;
FIGs. 11A-11C respectively show schematic diagrams of an executor of training of at least one of J parameter groups according to one embodiment of the present application;
FIG. 12 shows a schematic diagram of a parameter group adopted by a first code according to one embodiment of the present application;
FIG. 13 shows a schematic diagram of a second information block according to one embodiment of the present application;
FIG. 14 shows a flowchart of a transmission of first channel information according to one embodiment of the present application;
FIG. 15 shows a schematic diagram of an artificial intelligence processing system according to one embodiment of the present application;
FIG. 16 shows a schematic diagram of one code according to one embodiment of the present application;
FIG. 17 shows a schematic diagram of a first function according to one embodiment of the present application;
FIG. 18 shows a schematic diagram of one decoding layer group according to one embodiment of the present application;
FIG. 19 shows a structural block diagram of a processing apparatus used in a first node device according to one embodiment of the present application; and
FIG. 20 shows a structural block diagram of a processing apparatus in a second node device according to one embodiment of the present application.

### Detailed Description of Embodiments

The technical solution of the present application will be further described in detail below in conjunction with the accompanying drawings. It should be noted that, in the absence of conflicts, embodiments and features in the embodiments of the present application may be arbitrarily combined with each other.

### Embodiment 1

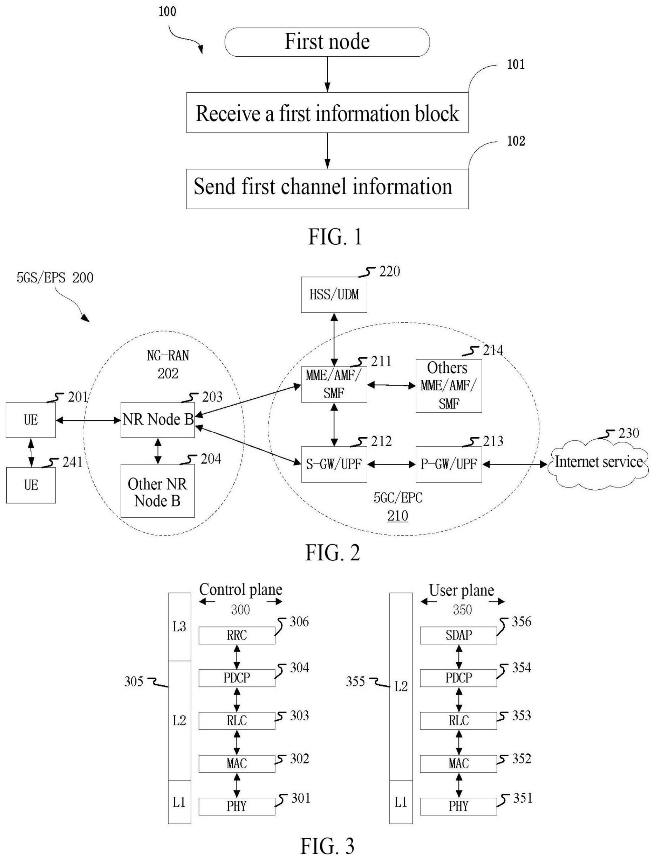

Embodiment 1 illustrates a flowchart of a first information block and first channel information according to one embodiment of the present application, as shown in FIG. 1. In 100 shown in FIG. 1, each block represents one step.

In Embodiment 1, the first node in the present application receives a first information block in step 101, the first information block being used for indicating a first RS resource set, and the first RS resource set comprising one or more RS resources; and sends first channel information in step 102, wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

As one embodiment, the first information block is borne by a higher-layer signaling.

As one embodiment, the first information block is borne by an RRC signaling.

As one embodiment, the first information block comprises part or all of fields in one RRC IE (Information Element).

As one embodiment, the first information block comprises part of fields in one RRC IE.

As one embodiment, the first information block comprises one RRC IE.

As one embodiment, the first information block comprises part of fields or all of fields in one or more RRC IEs.

As one embodiment, the first information block comprises part of fields or all of fields in an IE CSI-ReportConfig.

As one embodiment, the first information block comprises part of fields in an IE CSI-ReportConfig.

As one embodiment, the first information block comprises an IE CSI-ReportConfig.

As one embodiment, the first information block comprises part of fields or all of fields in an RRC IE of which the name comprises a CSI-ReportConfig.

As one embodiment, the first information block comprises part of fields or all of fields in an RRC IE of which the name comprises a ReportConfig.

As one embodiment, the first information block comprises part of fields or all of fields in an RRC IE of which the name comprises CSI.

As one embodiment, the first information block comprises part of fields or all of fields in one RRC IE of which the name comprises gen.

As one embodiment, the first information block comprises part of fields or all of fields in one RRC IE of which the name comprises Gen.

As one embodiment, the first information block comprises a report configuration of the first channel information.

As one embodiment, the first information block comprises part of information or all of information in a report configuration of the first channel information.

As one embodiment, a report configuration of the first channel information comprises at least one of a report configuration identifier, a report type, a report quantity, an RS resource for a channel measurement, and an RS resource for an interference measurement.

As one sub-embodiment of the above embodiment, the report configuration identifier is used for identifying the report configuration of the first channel information.

As one embodiment, the first information block indicates one resource configuration, and the one resource configuration is used for configuring the first RS resource set.

As one sub-embodiment of the above embodiment, the one resource configuration is one CSI (Channel Status Information) resource configuration.

As one sub-embodiment of the above embodiment, the one resource configuration is one IE CSI-ResourceConfig.

As one sub-embodiment of the above embodiment, the one resource configuration is one IE, and the name of the one resource configuration comprises a CSI-ResourceConfig.

As one sub-embodiment of the above embodiment, the first information block comprises a resourcesForChannelMeasurement field, and the resourcesForChannelMeasurement field comprised in the first information block indicates the one resource configuration.

As one sub-embodiment of the above embodiment, the first information block comprises a resourcesForChannelMeasurement field, and the resourcesForChannelMeasurement field comprised in the first information block indicates an identifier of the one resource configuration.

As one sub-embodiment of the above embodiment, one resource configuration used for configuring the first RS resource set comprises an identifier or index of each RS resource in the first RS resource set.

As one sub-embodiment of the above embodiment, one resource configuration used for configuring the first RS resource set comprises an identifier of each RS resource in the first RS resource set.

As one sub-embodiment of the above embodiment, one resource configuration used for configuring the first RS resource set is used for configuring each RS resource in the first RS resource set.

As one sub-embodiment of the above embodiment, one resource configuration used for configuring the first RS resource set comprises configuration information of each RS resource in the first RS resource set.

As one embodiment, the first information block further comprises a second RS resource set, and the second RS resource set comprises one or more RS resources configured for an interference measurement.

As one embodiment, the second RS resource set comprises at least one of a CSI-IM (Channel State Information-Interference Measurement) resource or an NZP CSI-RS resource for an interference measurement.

As one embodiment, the second RS resource set comprises at least a CSI-IM resource among the CSI-IM (Channel State Information-Interference Measurement) resource or an NZP (Non-Zero-Power) CSI-RS resource for an interference measurement.

As one embodiment, the second RS resource set comprises a CSI-IM resource.

As one embodiment, the second RS resource set comprises a CSI-IM resource and an NZP CSI-RS resource for an interference measurement.

Typically, CSI-IM is a zero-power reference signal.

As one embodiment, the first information block comprises two resource configurations, the two resource configurations being used for configuring the first RS resource set and the second RS resource set respectively.

As one sub-embodiment of the above embodiment, the two resource configurations are two CSI resource configurations respectively.

As one sub-embodiment of the above embodiment, the two resource configurations are two IE CSI-ResourceConfigs.

As one sub-embodiment of the above embodiment, the first information block comprises a resourcesForChannelMeasurement field and a csi-IM-ResourcesForInterference field, and the resourcesForChannelMeasurement field and the csi-IM-ResourcesForInterference field comprised in the first information block indicate the two resource configurations respectively.

As one embodiment, the first information block comprises a csi-IM-ResourcesForInterference field, and the csi-IM-ResourcesForInterference field comprised in the first information block is used for indicating the second RS resource set.

As one embodiment, the first information block comprises three resource configurations, and the three resource configurations are used for configuring the first RS resource set, a CSI-IM resource in the second RS resource set and an NZP CSI-RS resource in the second RS resource set that is configured for an interference measurement respectively.

As one sub-embodiment of the above embodiment, the three resource configurations are three CSI resource configurations respectively.

As one sub-embodiment of the above embodiment, the three resource configurations are three IE CSI-ResourceConfigs respectively.

As one sub-embodiment of the above embodiment, the first information block comprises a resourcesForChannelMeasurement field, a csi-IM-ResourcesForInterference field, and an nzp-CSI-RS-ResourcesForInterference field, and the resourcesForChannelMeasurement field, the csi-IM-ResourcesForInterference field, and the nzp-CSI-RS-ResourcesForInterference field comprised in the first information block indicate the three resource configurations respectively.

As one embodiment, the first information block comprises a csi-IM-ResourcesForInterference field and an nzp-CSI-RS-ResourcesForInterference field, and the csi-IM-ResourcesForInterference field and the nzp-CSI-RS-ResourcesForInterference field comprised in the first information block are used for indicating the second RS resource set.

As one embodiment, the specific definitions of IE CSI-ReportConfig, resourcesForChannelMeasurement, csi-IM-ResourcesForInterference, nzp-CSI-RS-ResourcesForInterference, and IE CSI-ResourceConfig refer to Chapter 6.3.2 of 3GPP TS 38.331.

As one embodiment, configuration information of one RS resource is indicated by one or more IEs.

As one embodiment, configuration information of one RS resource comprises at least one of an identifier of the one RS resource, a period, a time offset, an occupied time domain resource, an occupied frequency domain resource, an occupied code domain resource, a cyclic shift, an OCC (Orthogonal Cover Code), an occupied antenna port group, a sending sequence, and a TCI (Transmission Configuration Indicator) state.

As one embodiment, the first information block comprises a resourcesForChannelMeasurement field, and the resourcesForChannelMeasurement field comprised in the first information block is used for indicating the first RS resource set.

As one embodiment, the first information block also indicates a report type of the first channel information.

As one embodiment, the first information block comprises a reportConfigType (report Configuration Type) field; and the reportConfigType field in the first information block indicates a report type of the first channel information.

As one embodiment, the report type comprises one or more of periodic, semi-persistent on PUSCH, semi-persistent on PUCCH, or aperiodic.

As one embodiment, the report type comprises one or more of periodic, semi-persistent, or aperiodic.

As one embodiment, at least one RS resource in the first RS resource set is used for a channel measurement of the first channel information.

As one embodiment, the first RS resource set is used for a channel measurement of the first channel information.

As one embodiment, the first RS resource set comprises one RS resource.

As one embodiment, the first RS resource set comprises a plurality of RS resources.

As one embodiment, the first RS resource set comprises one or more CSI-RS (Channel State Information-Reference Signal) resources.

As one embodiment, the first RS resource set comprises one or two of a CSI-RS resource or an SS/PBCH (Synchronization Signal/Physical Broadcast Channel) block resource.

As one embodiment, any RS resource in the first RS resource set is a CSI-RS resource or an SS/PBCH block resource.

As one embodiment, the first RS resource set comprises one or two of a CSI-RS resource or an SSB resource.

As one embodiment, any RS resource in the first RS resource set is a CSI-RS resource or an SSB resource.

As one embodiment, any RS resource in the first RS resource set is a CSI-RS resource.

As one embodiment, the SSB refers to a Synchronization Signal Block.

As one embodiment, the SSB refers to a Synchronization Signal/Physical Broadcast Channel Block.

As one embodiment, the first information block comprises a higher-layer parameter timeRestrictionForChannelMeasurements, and the higher-layer parameter timeRestrictionForChannelMeasurements in the first information block is set to "configured."

As one embodiment, the first information block comprises a higher-layer parameter timeRestrictionForChannelMeasurements, and the higher-layer parameter timeRestrictionForChannelMeasurements in the first information block is set to "notConfigured."

As one embodiment, the first information block is used for configuring one aperiodic CSI reporting, and the first channel information is the one aperiodic CSI reporting configured by the first information block.

As one embodiment, the first information block is used for configuring one periodic or semi-persistent CSI reporting, and the first channel information is a reporting instance of the periodic or semi-persistent CSI reporting configured by the first information block.

As one embodiment, the first information block is used for configuring one periodic CSI reporting, and the first channel information is a reporting instance of the periodic CSI reporting configured by the first information block.

As one embodiment, the first information block is used for configuring one semi-persistent CSI reporting, and the first channel information is a reporting instance of the semi-persistent CSI reporting configured by the first information block.

As one embodiment, the first channel information is transmitted on a physical channel.

As one embodiment, the first channel information is transmitted on a PUSCH (Physical Uplink Shared Channel).

As one embodiment, the first channel information is transmitted on a PUCCH (Physical Uplink Control Channel).

As one embodiment, the first channel information is periodic or semi-persistent.

As one embodiment, the first channel information is semi-persistent, and the first channel information is activated by one MAC CE.

As one sub-embodiment of the above embodiment, the name of an MAC CE that activates the first channel information comprises SP CSI reporting on PUCCH Activation MAC CE.

As one sub-embodiment of the above embodiment, the name of an MAC CE that activates the first channel information comprises reporting on PUCCH Activation MAC CE.

As one embodiment, the first channel information is aperiodic, and the first channel information is triggered by one piece of DCI (Downlink Control Information).

As one embodiment, the first channel information is aperiodic, and the first channel information is triggered by one piece of DCI (Downlink Control Information); and the one piece DCI comprises a CSI request field, the CSI request field of the one piece of DCI is used for indicating one trigger state, and the one trigger state is used for indicating a report configuration of the first channel information.

As one sub-embodiment of the above embodiment, the one trigger state indicates a report configuration identifier of the first channel information.

As one embodiment, the first information block also indicates a report quantity comprised in the first channel information.

As one embodiment, the first information block comprises a reportQuantity field, and the reportQuantity field in the first information block indicates a report quantity comprised in a report configuration of the first channel information.

As one embodiment, the first information block comprises a reportQuantity field, and the reportQuantity field in the first information block indicates a report quantity comprised in the first channel information.

As one embodiment, a report quantity comprised in the first channel information comprises a first type.

As one embodiment, a report quantity comprised in the first channel information comprises a first type or a PMI (Precoding Matrix Indicator).

As one embodiment, a report quantity in a report configuration of the first channel information comprises at least one of a first type, a PMI (Precoding Matrix Indicator), a CQI (Channel Quality Indicator), a CRI (CSI-RS Resource Indicator), an SS/PBCH block resource indicator (SSBRI), a layer indicator (LI), an RI (Rank Indicator), an L1-RSRP (Layer 1 Reference Signal Received Power), or an L1-SINR (Layer 1 Signal-to-Noise and Interference Ratio).

As one embodiment, it comprises:
sending a first CQI,
wherein a report quantity in a report configuration of the first channel information comprises a CQI; and the measurement for at least one RS resource in the first RS resource set is used for generating first input channel information, the first input channel information is used for generating the first CQI, and the first input channel information is available only to the first node.

As one embodiment, it comprises:
sending a first CQI,
wherein a report quantity in a report configuration of the first channel information comprises a CQI; and the first channel information is used for generating the first CQI.

As one embodiment, the first type is different from any report quantity among a PMI, a CQI, a CRI, an SS/PBCH block resource indication, a layer indication, an RI, an L1-RSRP, or an L1-SINR.

As one embodiment, when the report quantity comprised in the first channel information comprises a PMI, the first channel information is used for indicating a codebook-based precoding matrix.

As one embodiment, when the report quantity comprised in the first channel information comprises a first type, the first channel information is used for determining a non-codebook-based precoding matrix.

Typically, the PMI is codebook-based.

As one embodiment, the first type is non-codebook-based.

As one embodiment, the first channel information comprises non-codebook-based channel information.

As one embodiment, the first channel information is non-codebook-based channel information.

As one embodiment, the meaning of the sentence "the PMI is codebook-based" comprises: the PMI is selected from a candidate codebook set.

As one embodiment, the meaning of the sentence "the PMI is codebook-based" comprises: the PMI indicates at least one codebook index.

As one embodiment, the meaning of the sentence "the PMI is codebook-based" comprises: the PMI indicates a codebook-based precoding matrix.

As one embodiment, the meaning of the sentence "the first type is non-codebook-based" comprises: the first type indicates non-codebook-based channel information.

As one embodiment, the meaning of the sentence "the first type is non-codebook based" comprises: the first type indicates channel information generated based on artificial intelligence or machine learning.

As one embodiment, the meaning of the sentence "the first type is non-codebook based" comprises: the first type indicates channel information generated based on the first code.

As one embodiment, channel information generated based on artificial intelligence or machine learning is non-codebook-based.

As one embodiment, the meaning of "the first channel information comprises non-codebook-based channel information" comprises: channel information reconstructed by a sender of the first information block according to the first channel information is unavailable to the sender of the first channel information.

As one embodiment, the meaning of "the first channel information comprises non-codebook-based channel information" comprises: the first channel information does not comprise a codebook index.

As one embodiment, the meaning of "the first channel information comprises non-codebook-based channel information" comprises: the first channel information is not a PMI.

As one embodiment, the meaning of "the first channel information comprises non-codebook-based channel information" comprises: the first channel information is used for precoding, and the first channel information does not comprise a codebook index.

As one embodiment, the meaning of "the first channel information comprises non-codebook-based channel information" comprises: the first channel information is used for precoding, and the first channel information is not a PMI.

As one embodiment, the non-codebook-based channel information refers to information that cannot be indicated by a PMI or is not selected from a candidate codebook set.

As one embodiment, the non-codebook-based channel information is used for precoding.

As one embodiment, the non-codebook-based channel information is used for determining a channel parameter matrix.

As one embodiment, the non-codebook-based channel information is used for determining a phase, or an amplitude, or a coefficient between at least two antenna ports.

As one embodiment, the non-codebook-based channel information is used for determining at least one eigenvector.

As one embodiment, the non-codebook-based channel information is used for determining at least one eigenvalue.

As one embodiment, the non-codebook-based channel information is used for determining at least one precoding matrix.

As one embodiment, the non-codebook-based channel information is used for determining at least one channel parameter matrix.

As one embodiment, the measurement for the first RS resource set is used for generating the first channel information.

As one embodiment, the meaning of "the measurement for at least one RS resource in the first RS resource set is used for generating the input of the first code" refers to: the measurement for part or all of RS resources in the first RS resource set is used for generating the input of the first code.

As one embodiment, the meaning of "the measurement for at least one RS resource in the first RS resource set is used for generating the input of the first code" refers to: the measurement for part of RS resources in the first RS resource set is used for generating the input of the first code.

As one embodiment, the meaning of "the measurement for at least one RS resource in the first RS resource set is used for generating the input of the first code" refers to: the measurement for each RS resource in the first RS resource set is used for generating the input of the first code.

As one embodiment, the meaning of "the measurement for at least one RS resource in the first RS resource set is used for generating the input of the first code" refers to: the measurement for one RS resources in the first RS resource set is used for generating the input of the first code.

As one embodiment, the meaning of "the measurement for at least one RS resource in the first RS resource set is used for generating the input of the first code" refers to: the first RS resource set comprises only one RS resource, and the measurement for the first RS resource set is used for generating the input of the first code.

As one embodiment, the measurement for the first RS resource set is used for generating first input channel information, and an output after the first input channel information is input into the first code comprises the first channel information.

As one embodiment, the measurement for the first RS resource set is used for generating first input channel information, and an output after the first input channel information is input into the first code is used for generating the first channel information.

As one embodiment, the measurement for at least one RS resource in the first RS resource set is used for generating first input channel information, and an output after the first input channel information is input into the first code comprises the first channel information.

As one embodiment, the measurement for at least one RS resource in the first RS resource set is used for generating first input channel information, and an output after the first input channel information is input into the first code is used for generating the first channel information.

As one embodiment, the measurement for one RS resource in the first RS resource set is used for generating first input channel information, and an output after the first input channel information is input into the first code comprises the first channel information.

As one embodiment, the measurement for one RS resource in the first RS resource set is used for generating first input channel information, and an output after the first input channel information is input into the first code is used for generating the first channel information.

As one embodiment, each of the J parameter groups is obtained by training.

As one embodiment, part of the J parameter groups are obtained by training.

As one embodiment, the training of the J parameter groups is based on artificial intelligence or based on machine learning.

As one embodiment, any one of the J parameter groups is associated with only one or both of the first identifier or the second identifier.

As one embodiment, the meaning of "at least one of the J parameter groups is associated with only one or both of the first identifier or the second identifier" refers to: at least one of the J parameter groups is associated with only one of the first identifier or the second identifier.

As one embodiment, the meaning of "at least one of the J parameter groups is associated with only one or both of the first identifier or the second identifier" refers to: at least one of the J parameter groups is associated with one or both of the first identifier or the second identifier.

As one embodiment, the meaning of "any one of the J parameter groups is associated with only one or both of the first identifier or the second identifier" refers to: any one of the J parameter groups is associated with only one of the first identifier or the second identifier.

As one embodiment, the meaning of "any one of the J parameter groups is associated with only one or both of the first identifier or the second identifier" refers to: any one of the J parameter groups is associated with one or both of the first identifier or the second identifier.

As one embodiment, the first identifier is used for indicating or identifying a first target RS resource set, and the second identifier is used for indicating or identifying a second target RS resource set; and the first target RS resource set comprises one or more RS resources, and the second target RS resource set comprises one or more RS resources.

As one embodiment, the first target RS resource set comprises one SRS (Sounding Reference Signal) resource set, and the second target RS resource set comprises one SRS resource set.

As one embodiment, the first target RS resource set comprises one or more of a CSI-RS resource, an SS/PBCH block resource, or an SRS resource, and the second target RS resource set comprises one or more of the CSI-RS resource, the SS/PBCH block resource, or the SRS resource.

As one embodiment, the first identifier is used for indicating or identifying a first TAG (Timing Advance Group), and the second identifier is used for indicating or identifying a second TAG.

As one embodiment, the first identifier is used for indicating or identifying a first CORESET (Control Resource Set) pool, and the second identifier is used for indicating or identifying a second CORESET pool.

As one embodiment, the first CORESET pool comprises one or more CORESETs, and the second CORESET pool comprises one or more CORESETs.

As one embodiment, the first CORESET pool and the second CORESET pool are indicated or identified by different coresetPoolIndexes respectively.

As one embodiment, the first identifier is used for indicating or identifying a first TCI set, and the second identifier is used for indicating or identifying a second TCI set, the first TCI set comprising one or more TCI states, and the second TCI set comprising one or more TCI states.

As one embodiment, one TCI state configures at least one reference resource and a QCL (Quasi-Co-Location) type corresponding to each reference resource.

As one embodiment, any reference resource configured by one TCI state is one of an SRS resource, a CSI-RS resource, or an SS/PBCH block resource.

As one embodiment, any reference resource configured by one TCI state is a CSI-RS resource or an SS/PBCH block resource.

As one embodiment, the one TCI state comprises at least one piece of QCL information.

As one embodiment, the one TCI state comprises one or two pieces of QCL information.

As one embodiment, the QCL information indicates one reference resource and a corresponding QCL type.

As one embodiment, any reference resource indicated by the QCL information is one of an SRS resource, a CSI-RS resource, or an SS/PBCH block resource.

As one embodiment, any reference resource indicated by the QCL information is a CSI-RS resource or an SS/PBCH block resource.

As one embodiment, the QCL types comprise a typeA, a typeB, a typeC, and a typeD.

As one embodiment, the QCL type is one of a typeA, a typeB, a typeC, and a typeD.

As one embodiment, the specific definitions of a TCI state and QCL (Quasi Co-Location) refer to Chapter 5.1.5 of 3GPP TS38.214.

As one embodiment, the specific definitions of a CORESET and a TCI state refer to Chapter 10 of 3GPP TS38.213.

As one embodiment, the first identifier is used for indicating or identifying a first group of training datasets, and the second identifier is used for indicating or identifying a second group of training datasets, the first group of training datasets comprising one or more training datasets, and the second group of training datasets comprising one or more training datasets.

As one embodiment, the measurement for the first target RS resource set is used for generating the first group of training datasets.

As one embodiment, the measurement for the second target RS resource set is used for generating the second group of training datasets.

As one embodiment, the measurement for at least one RS resource in the first target RS resource set is used for generating the first group of training datasets.

As one embodiment, any one of the first group of training datasets is one of the J1 training datasets, and any one of the second group of training datasets is one of the J1 training datasets.

As one embodiment, at least one of the first group of training datasets belongs to the J1 training datasets, and at least one of the second group of training datasets belongs to the J1 training datasets.

As one embodiment, at least one of the first group of training datasets belongs to the J1 training datasets, and at least one of the first group of training datasets does not belong to the J1 training datasets.

As one embodiment, at least one of the second group of training datasets belongs to the J1 training datasets, and at least one of the second group of training datasets does not belong to the J1 training datasets.

As one embodiment, the measurement for at least one RS resource in the second target RS resource set is used for generating the second group of training datasets.

As one embodiment, the first identifier is used for indicating or identifying a first PCI (Physical Cell Identity), and the second identifier is used for indicating or identifying a second PCI.

As one embodiment, the first PCI is a PCI of a first serving cell, and the second PCI is a PCI of a second serving cell, the first serving cell being different from the second serving cell.

As one embodiment, the first PCI is a PCI of a first serving cell, and the second PCI is one PCI different from the first PCI.

As one sub-embodiment of this embodiment, the first PCI is a PCI of a first serving cell, and the second PCI is one PCI configured to the first serving cell that is different from the PCI of the first serving cell.

As one sub-embodiment of this embodiment, the first PCI is a PhysCellId of a first serving cell, and the second PCI is one PhysCellId that is different from the first PCI.

As one sub-embodiment of this embodiment, the first PCI is a PhysCellId of a first serving cell, and the second PCI is one PhysCellId configured to the first serving cell that is different from the PhysCellId of the first serving cell.

As one embodiment, the first PCI is different from the second PCI.

As one embodiment, the first PCI and the second PCI are two different non-negative integers.

As one embodiment, the first PCI and the second PCI are two different PCIs.

As one embodiment, the first PCI and the second PCI are two different PhysCellIds.

As one embodiment, the first PCI and the second PCI are two different positive integers.

As one embodiment, the first PCI is one Serving Cell PCI, and the second PCI is one Additional PCI.

As one embodiment, the specific definitions of a PhysCellId refer to Chapter 6.3.2 of 3GPP TS38.331.

As one embodiment, the specific definitions of a PhysCellId, a Serving Cell PCI, and an Additional PCI refer to 3GPP TS38.214.

### Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of the LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 that performs sidelink communication with the UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides packet switching services, however those skilled in the art will readily understand that various concepts presented throughout the present application may be extended to networks providing circuit switching services. The NG-RAN202 comprises an NR (New Radio) Node B (gNB) 203 and other gNB204. The gNB203 provides user and control plane protocol termination toward the UE201. The gNB203 may be connected to the other gNB204 via an Xn interface (e.g., backhaul). The gNB203 may also be referred to as a base station, a base transceiver station, a radio base station, a radio transceiver, a transceiver function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband Internet of Things device, a machine type communication device, a land vehicle, a car, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that handles a signaling between the UE201 and the 5GC/EPC210. Substantially, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise the Internet, an intranet, an IMS (IP Multimedia Subsystem), and a packet switching service.

As one embodiment, the UE201 corresponds to the first node in the present application, and the gNB203 corresponds to the second node in the present application.

As one embodiment, the UE201 supports generating reporting using AI (Artificial Intelligence) or machine learning.

As one embodiment, the UE201 supports generating a trained model using training data or generating part of parameters of a trained model using trained data.

As one embodiment, the UE201 supports determining at least part of parameters of a CNN (Convolutional Neural Network) for CSI reconstruction by training.

As one embodiment, the gNB203 supports generating reporting using AI (Artificial Intelligence) or machine learning.

As one embodiment, the gNB203 supports generating a trained model using training data or generating part of parameters of a trained model using trained data.

As one embodiment, the gNB203 supports determining at least part of parameters of a CNN (Convolutional Neural Network) for CSI reconstruction by training.

As one embodiment, the UE201 is a terminal supporting MIMO.

As one embodiment, the gNB203 supports an MIMO-based transmission.

As one embodiment, the UE201 supports using AI or deep learning to perform compression on CSI.

As one embodiment, the gNB203 supports using AI or deep learning to perform decompression on CSI.

As one embodiment, the gNB203 is a Macrocellular base station.

As one embodiment, the gNB203 is a Micro Cell base station.

As one embodiment, the gNB203 is a Picocell base station.

As one embodiment, the gNB203 is a Femtocell.

As one embodiment, the gNB203 is a base station device supporting a large-latency difference.

As one embodiment, the gNB203 is one flying platform device.

As one embodiment, the gNB203 is a satellite device.

As one embodiment, the first node and the second node in the present application are the UE201 and the gNB203, respectively.

### Embodiment 3

Embodiment 3 illustrates a schematic diagram of an embodiment of a radio protocol architecture for a user plane and a control plane according to one embodiment of the present application, as shown in FIG. 3.

Embodiment 3 shows a schematic diagram of an embodiment of a radio protocol architecture for one user plane and one control plane according to the present application, as shown in FIG. 3. FIG. 3 is a schematic diagram illustrating an embodiment of a radio protocol architecture for a user plane 350 and a control plane 300. FIG. 3 shows the radio protocol architecture of the control plane 300 used between a first communication node device (UE, a gNB or an RSU in V2X) and a second communication node device (a gNB, UE or an RSU in V2X), or between two pieces of UE using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. The Layer 2 (L2 layer) 305 is above the PHY301, and is responsible for a link between the first communication node device and the second communication node device, or between two pieces of UE. The L2 layer 305 comprises an MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembling of upper-layer data packets, retransmission of lost data packets, and reordering of data packets to compensate for out-of-order reception due to HARQ. The MAC sublayer 302 provides multiplexing between logical channels and transmission channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring a lower layer using an RRC signaling between the second communication node device and the first communication node device. The radio protocol architecture for the user plane 350 comprises a Layer 1 (L1 layer) and a Layer 2 (L2 layer). The radio protocol architecture for the first communication node device and the second communication node device in the user plane 350 is substantially the same as corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper-layer data packets to reduce radio transmission overhead. The L2 layer 355 in the user plane 350 further comprises an SDAP (Service Data Adaptation Protocol) sublayer 356, and the SDAP sublayer 356 is responsible for mapping between QoS flows and data radio bearers (DRBs) to support the diversity of services. Although not shown in the figure, the first communication node device may have several upper layers above the L2 layer 355, comprising a network layer (e.g., an IP layer) terminating at the P-GW on the network side and an application layer terminating at the other end (e.g., remote UE and a server) of a connection.

As one embodiment, the radio protocol architecture in FIG. 3 is applicable to the first node in the present application.

As one embodiment, the radio protocol architecture in FIG. 3 is applicable to the second node in the present application.

As one embodiment, the first information block in the present application is generated at the RRC sublayer 306.

As one embodiment, the second information block in the present application is generated at the RRC sublayer 306.

As one embodiment, the first channel information in the present application is generated at the PHY301 or the PHY351.

### Embodiment 4

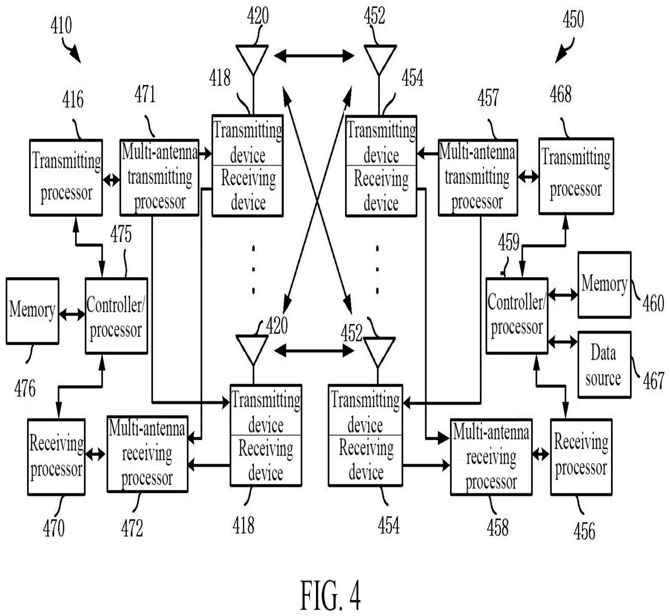

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, upper-layer data packets from a core network are provided to the controller/processor 475. The controller/processor 475 implements the functionality of the L2 layer. In DL, the controller/processor 475 provides header compression, encryption, packet segmentation and reordering, multiplexing between logical and transmission channels, and radio resource allocation to the second communication device 450 based on various priority metrics. The controller/processor 475 is also responsible for HARQ operations, retransmission of lost packets, and signalings to the second communication device 450. The transmitting processor 416 and the multi-antenna transmitting processor 471 implement various signal processing functions for the L1 layer (i.e., physical layer). The transmitting processor 416 implements coding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding on coded and modulated symbols, comprising codebook-based precoding and non-codebook-based precoding, and beamforming processing to generate one or more parallel streams. The transmitting processor 416 then maps each parallel stream to a subcarrier, multiplexes the modulated symbols with a reference signal (e.g., pilot) in a time domain and/or a frequency domain, and then uses a Fast Fourier Inverse Transform (IFFT) to generate a physical channel for carrying a time-domain multi-carrier symbol stream. The multi-antenna transmitting processor 471 then performs sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, and converts a radio frequency stream into a baseband multi-carrier symbol stream and provides it to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In the frequency domain, a physical layer data signal and the reference signal are demultiplexed by the receiving processor 456, wherein the reference signal will be used for a channel estimation, and the data signal undergoes multi-antenna detection in the multi-antenna receiving processor 458 to recover any parallel stream destined for the second communication device 450. Symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In DL (DownLink), the controller/processor 459 provides demultiplexing between transmission and logical channels, packet reassembly, decryption, header decompression, and control signal processing to recover upper-layer data packets from a core network. The upper-layer data packets are then provided to all protocol layers above the L2 layer. Various control signals may also be provided to the L3 for L3 processing. The controller/processor 459 is also responsible for error detection using an acknowledgment (ACK) and/or negative acknowledgment (NACK) protocol to support HARQ operations.

In the transmission from the second communication device 450 to the first communication device 410, at the second communication device 450, a data source 467 is used to provide upper-layer data packets to the controller/processor 459. The data source 467 represents all protocol layers above the L2 layer. Similar to the sending function at the first communication device 410 described in the DL, the controller/processor 459 implements header compression, encryption, packet segmentation and reordering, and multiplexing between logic and transmission channels based on radio resource allocation of the first communication device 410, and implements L2 layer functions for the user plane and the control plane. The controller/processor 459 is also responsible for HARQ operations, retransmission of lost packets, and signalings to the first communication device 410. The transmitting processor 468 executes modulation mapping and channel coding processing, the multi-antenna transmitting processor 457 performs digital multi-antenna spatial precoding, comprising codebook-based precoding and non-codebook-based precoding, and beamforming processing, and the transmitting processor 468 then modulates a generated parallel stream into a multi-carrier/single-carrier symbol stream, and then provides it to different antennas 452 via the transmitting device 454 after undergoing analog precoding/beamforming operation in the multi-antenna transmitting processor 457. Each transmitting device 454 first converts the baseband symbol stream provided by the multi-antenna transmitting processor 457 into a radio frequency symbol stream, and then provides it to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. The controller/processor 475 provides demultiplexing between transmission and logical channels, packet reassembly, decryption, header decompression, and control signal processing to recover upper-layer data packets from the second communication device 450. The upper-layer data packets from the controller/processor 475 may be provided to the core network. The controller/processor 475 is also responsible for error detection using the ACK and/or NACK protocol to support HARQ operations.

As one embodiment, the second communication device 450 comprises: at least one processor and at least one memory, the at least one memory comprising a computer program code; and the at least one memory and the computer program codes are configured to be used together with the at least one processor. The second communication device 450 at least: receives a first information block, the first information block being used for indicating a first RS resource set, and the first RS resource set comprising one or more RS resources; and sends first channel information, wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

As one embodiment, the second communication device 450 comprises: a memory storing a computer-readable instruction program, the computer-readable instruction program generating actions when executed by at least one processor, and the actions comprising: receiving a first information block, the first information block being used for indicating a first RS resource set, and the first RS resource set comprising one or more RS resources; and sending first channel information, wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

As one embodiment, the first communication device 410 comprises: at least one processor and at least one memory, the at least one memory comprising a computer program code; and the at least one memory and the computer program codes are configured to be used together with the at least one processor. The first communication device 410 apparatus at least: sends a first information block, the first information block being used for indicating a first RS resource set, and the first RS resource set comprising one or more RS resources; and receives first channel information, wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

As one embodiment, the first communication device 410 comprises a memory storing a computer-readable instruction program, the computer-readable instruction program generating actions when executed by at least one processor, and the actions comprising: sending a first information block, the first information block being used for indicating a first RS resource set, and the first RS resource set comprising one or more RS resources; and receiving first channel information, wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the second information block in the present application; and at least one of {the antenna 420, the transmitting device 418, the transmitting processor 416, the multi-antenna transmitting processor 471, the controller/processor 475, and the memory 476} is used for sending the second information block in the present application.

As one embodiment, at least one of {the antenna 452, the transmitting device 454, the transmitting processor 468, the multi-antenna transmitting processor 457, the controller/processor 459, and the memory 460} is used for sending the first channel information in the present application; and at least one of {the antenna 420, the receiving device 418, the receiving processor 470, the multi-antenna receiving processor 472, the controller/processor 475, and the memory 476} is used for receiving the first channel information in the present application.

### Embodiment 5

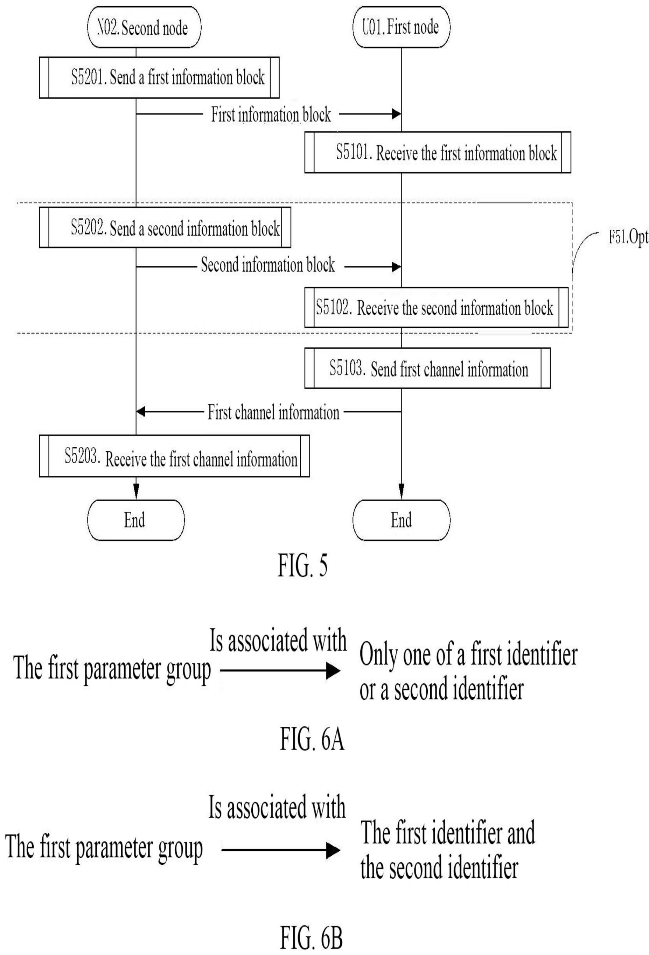

Embodiment 5 illustrates a flowchart of a radio transmission according to one embodiment of the present application, as shown in FIG. 5. In FIG. 5, a first node U01 and a second node N02 are respectively two communication nodes for a transmission through an air interface, wherein steps in a block F51 are optional.

For **the first node U01**, in step S5101, a first information block is received; in step S5102, a second information block is received; and in step S5103, first channel information is sent.

For **the second node N02,** in step S5201, a first information block is sent; in step S5202, a second information block is sent; and in step S5203, first channel information is received.

In Embodiment 5, the first information block is used for indicating a first RS resource set, and the first RS resource set comprises one or more RS resources; and a first code is used for generating the first channel information, and the measurement for at least one RS resource in the first RS resource set is used for generating the input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

As one embodiment, the steps in the block F51 do not exist.

As one embodiment, the steps in the block F51 exist.

As one embodiment, the second information block is used for indicating the identifier with which the parameter group adopted by the first code is associated.

As one embodiment, the second information block and the first information block are simultaneously received.

As one embodiment, the second information block and the first information block are not simultaneously received.

As one embodiment, the second information block is received later than the first information block.

As one embodiment, the second information block is received not later than the first information block.

### Embodiments 6A-6B

Embodiments 6A-6B illustrate schematic diagrams of a first parameter group according to one embodiment of the present application respectively, as shown in FIGs. 6A-6B.

In Embodiment 6A, any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with only one of a first identifier or a second identifier.

In Embodiment 6B, any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with the first identifier and the second identifier.

As one embodiment, J1 is equal to 1.

As one embodiment, J1 is greater than 1.

As one embodiment, J1 is greater than 1, and the J parameter groups are all obtained by training based on the same training dataset among the J1 training datasets.

As one embodiment, J1 is greater than 1, and there exist two of the J parameter groups that are obtained by training based on the same training dataset among the J1 training datasets.

As one embodiment, J1 is greater than 1, and there exist two of the J parameter groups that are obtained by training based on different training datasets among the J1 training datasets.

As one embodiment, there exist two of the J1 training datasets that comprise one piece of same training data.

As one embodiment, any two of the J1 parameter groups comprises at least one piece of different training data.

As one embodiment, J1 is greater than 1, and any one of the J1 training datasets corresponds to one or more RS resources.

As one embodiment, J1 is greater than 1, and any one of the J1 training datasets corresponds to one of J2 RS resource sets, J2 being a positive integer greater than 1.

As one embodiment, J1 is greater than 1, and there exist two of the J1 training datasets that correspond to two of J2 RS resource sets respectively, J2 being a positive integer greater than 1.

As one embodiment, J1 is greater than 1, and there exist two of the J1 training datasets that correspond to the same RS resource set among J2 RS resource sets, J2 being a positive integer greater than 1.

As one embodiment, J1 is greater than 1, and the J1 training datasets correspond to J2 RS resource sets respectively, J2 being a positive integer greater than 1, and J2 being equal to J1.

As one embodiment, any one of the J2 RS resource sets comprises one or more RS resources.

As one embodiment, any one of the J2 RS resource sets comprises a plurality of RS resources.

As one embodiment, RS resources corresponding to one training dataset comprise a downlink RS resource.

As one embodiment, RS resources corresponding to one training dataset comprise one or more of a CSI-RS resource, an SS/PBCH block resource, or an SRS resource.

As one embodiment, RS resources corresponding to one training dataset comprise at least one of a CSI-RS resource or an SS/PBCH block resource.

As one embodiment, RS resources corresponding to one training dataset comprise a CSI-RS resource.

As one embodiment, RS resources corresponding to one training dataset comprise an SRS resource.

As one embodiment, one training dataset comprises one or more pieces of training data.

As one embodiment, one training dataset comprises channel information obtained from the measurement for one or more RS resources.

As one embodiment, one training dataset corresponds to one or more RS resources.

As one embodiment, one training dataset corresponds to a plurality of RS resources.

As one embodiment, the meaning of "one training dataset corresponds to one RS resource" comprises: the one training dataset comprises training data generated by the measurement for the one RS resource.

As one embodiment, the meaning of "one training dataset corresponds to one RS resource" comprises: the one training dataset comprises channel information obtained by the measurement for the one RS resource.

As one embodiment, the meaning of "one training dataset corresponds to one RS resource" comprises: the measurement for the one RS resource is used for generating the input of the first code, and the one training dataset comprises the input of the first code that is generated by the measurement for the one RS resource.

As one embodiment, the meaning of "one training dataset corresponds to one RS resource" comprises: the measurement for the one RS resource is used for generating the input of the first code, and the one training dataset comprises the input of the first code that is generated by the measurement for the one RS resource and an output after the input undergoes the first code.

As one embodiment, the meaning of "one training dataset corresponds to one RS resource" comprises: the measurement for the one RS resource is used for generating the input of the first code, and the one training dataset comprises an output after the input of the first code that is generated by the measurement for the one RS resource undergoes the first code and an output after the first decode obtained by taking the output as an input of a first decode.

As one embodiment, the meaning of "one training dataset corresponds to one RS resource" comprises: the measurement for the one RS resource is used for generating the input of the first code, and the one training dataset comprises the input of the first code that is generated by the measurement for the one RS resource, and an output after the first decode obtained by taking the output as an input of a first decode.

As one embodiment, one piece of training data in one training dataset comprises both the input and output of the first code.

As one embodiment, one piece of training data in one training dataset comprises both the input and output of the first decode.

As one embodiment, the J parameter groups correspond to the same RI.

As one embodiment, part of the J parameter groups correspond to the same RI.

As one embodiment, the first parameter group is associated with only one of a first identifier or a second identifier.

As one embodiment, the first parameter group is associated with the first identifier.

As one embodiment, the first parameter group is associated with the second identifier.

As one embodiment, the first parameter group is associated with the first identifier and the second identifier.

As one embodiment, the meaning of "the first parameter group is associated with the first identifier" comprises: the first identifier is used for indicating or identifying a first target RS resource set, the first parameter group is obtained by training based on the first training dataset, and an RS resource corresponding to the first training dataset belongs to the first target RS resource set; and the meaning of "the first parameter group is associated with the second identifier" comprises: the second identifier is used for indicating or identifying a second target RS resource set, the first parameter group is obtained by training based on the first training dataset, and an RS resource corresponding to the first training dataset belongs to the second target RS resource set.

As one embodiment, the meaning of "the first parameter group is associated with the first identifier" comprises: the first identifier is used for indicating or identifying a first target RS resource set, the first parameter group is obtained by training based on the first training dataset, and at least one RS resource corresponding to the first training dataset belongs to the first target RS resource set; and the meaning of "the first parameter group is associated with the second identifier" comprises: the second identifier is used for indicating or identifying a second target RS resource set, the first parameter group is obtained by training based on the first training dataset, and at least one RS resource corresponding to the first training dataset belongs to the second target RS resource set.

As one embodiment, the meaning of "the first parameter group is associated with the first identifier" comprises: the first identifier is used for indicating or identifying a first target RS resource set, the first parameter group is obtained by training based on the first training dataset, and any RS resource corresponding to the first training dataset belongs to the first target RS resource set; and the meaning of "the first parameter group is associated with the second identifier" comprises: the second identifier is used for indicating or identifying a second target RS resource set, the first parameter group is obtained by training based on the first training dataset, and any RS resource corresponding to the first training dataset belongs to the second target RS resource set.

As one embodiment, the meaning of "the first parameter group is associated with the first identifier" comprises: the first identifier is used for indicating or identifying a first TAG, the first parameter group is obtained by training based on the first training dataset, and an RS resource corresponding to the first training dataset belongs to the first TAG; and the meaning of "the first parameter group is associated with the second identifier" comprises: the second identifier is used for indicating or identifying a second TAG, the first parameter group is obtained by training based on the first training dataset, and an RS resource corresponding to the first training dataset belongs to the second TAG.

As one embodiment, the meaning of "the first parameter group is associated with the first identifier" comprises: the first identifier is used for indicating or identifying a first TAG, the first parameter group is obtained by training based on the first training dataset, and at least one RS resource corresponding to the first training dataset belongs to the first TAG; and the meaning of "the first parameter group is associated with the second identifier" comprises: the second identifier is used for indicating or identifying a second TAG, the first parameter group is obtained by training based on the first training dataset, and at least one RS resource corresponding to the first training dataset belongs to the second TAG.

As one embodiment, the meaning of "the first parameter group is associated with the first identifier" comprises: the first identifier is used for indicating or identifying a first TAG, the first parameter group is obtained by training based on the first training dataset, and any RS resource corresponding to the first training dataset belongs to the first TAG; and the meaning of "the first parameter group is associated with the second identifier" comprises: the second identifier is used for indicating or identifying a second TAG, the first parameter group is obtained by training based on the first training dataset, and any RS resource corresponding to the first training dataset belongs to the second TAG.

As one embodiment, the meaning of "the first parameter group is associated with the first identifier" comprises: the first identifier is used for indicating or identifying a first TCI set, the first parameter group is obtained by training based on the first training dataset, and an RS resource corresponding to the first training dataset is associated with the first TCI set; and the meaning of "the first parameter group is associated with the second identifier" comprises: the second identifier is used for indicating or identifying a second TCI set, the first parameter group is obtained by training based on the first training dataset, and an RS resource corresponding to the first training dataset is associated with the second TCI set.

As one embodiment, the meaning of "an RS resource corresponding to the first training dataset is associated with the first TCI set" comprises: a TCI state of an RS resource corresponding to the first training dataset belongs to the first TCI set; and the meaning of "an RS resource corresponding to the first training dataset is associated with the second TCI set" comprises: a TCI state of an RS resource corresponding to the first training dataset belongs to the second TCI set.

As one embodiment, the meaning of "an RS resource corresponding to the first training dataset is associated with the first TCI set" comprises: any RS resource corresponding to the first training dataset and one RS resource comprised in the first TCI set are QCL; and the meaning of "an RS resource corresponding to the first training dataset is associated with the second TCI set" comprises: any RS resource in the first training dataset and one RS resource comprised in the second TCI set are QCL.

As one embodiment, the meaning of "an RS resource corresponding to the first training dataset is associated with the first TCI set" comprises: any RS resource corresponding to the first training dataset and one RS resource comprised in the first TCI set have the same QCL information; and the meaning of "an RS resource corresponding to the first training dataset is associated with the second TCI set" comprises: any RS resource corresponding to the first training dataset and one RS resource comprised in the second TCI set have the same QCL information.

As one embodiment, the meaning of "an RS resource corresponding to the first training dataset is associated with the first TCI set" comprises: QCL information of any RS resource corresponding to the first training dataset is determined by one RS resource comprised in the first TCI set; and the meaning of "an RS resource corresponding to the first training dataset is associated with the second TCI set" comprises: QCL information of any RS resource corresponding to the first training dataset is determined by one RS resource comprised in the second TCI set.

As one embodiment, the meaning of "an RS resource corresponding to the first training dataset is associated with the first TCI set" comprises: any RS resource corresponding to the first training dataset belongs to one TCI state in the first TCI set; and the meaning of "an RS resource corresponding to the first training dataset is associated with the second TCI set" comprises: any RS resource corresponding to the first training dataset belongs to one TCI state in the second TCI set.

As one embodiment, the meaning of "an RS resource corresponding to the first training dataset is associated with the first TCI set" comprises: a TCI state of at least one RS resource corresponding to the first training dataset belongs to the first TCI set; and the meaning of "an RS resource corresponding to the first training dataset is associated with the second TCI set" comprises: a TCI state of at least one RS resource corresponding to the first training dataset belongs to the second TCI set.

As one embodiment, the meaning of "an RS resource corresponding to the first training dataset is associated with the first TCI set" comprises: at least one RS resource corresponding to the first training dataset and at least one RS resource comprised in the first TCI set are QCL; and the meaning of "an RS resource corresponding to the first training dataset is associated with the second TCI set" comprises: at least one RS resource corresponding to the first training dataset and at least one RS resource comprised in the second TCI set are QCL.

As one embodiment, the meaning of "an RS resource corresponding to the first training dataset is associated with the first TCI set" comprises: at least one RS resource corresponding to the first training dataset and at least one RS resource comprised in the first TCI set have the same QCL information; and the meaning of "an RS resource corresponding to the first training dataset is associated with the second TCI set" comprises: at least one RS resource corresponding to the first training dataset and at least one RS resource comprised in the second TCI set have the same QCL information.

As one embodiment, the meaning of "an RS resource corresponding to the first training dataset is associated with the first TCI set" comprises: QCL information of at least one RS resource corresponding to the first training dataset is determined by at least one RS resource comprised in the first TCI set; and the meaning of "an RS resource corresponding to the first training dataset is associated with the second TCI set" comprises: QCL information of at least one RS resource corresponding to the first training dataset is determined by at least one RS resource comprised in the second TCI set.

As one embodiment, the meaning of "an RS resource corresponding to the first training dataset is associated with the first TCI set" comprises: at least one RS resource corresponding to the first training dataset belongs to at least one TCI state in the first TCI set; and the meaning of "an RS resource corresponding to the first training dataset is associated with the second TCI set" comprises: at least one RS resource corresponding to the first training dataset belongs to at least one TCI state in the second TCI set.

As one embodiment, the meaning of "the first parameter group is associated with the first identifier" comprises: the first identifier is used for indicating or identifying a first group of training datasets, the first parameter group is obtained by training based on the first training dataset, and the first training dataset belongs to the first group of training datasets; and the meaning of "the first parameter group is associated with the second identifier" comprises: the second identifier is used for indicating or identifying a second training dataset, the first parameter group is obtained by training based on the first training dataset, and the first training dataset belongs to the second group of training dataset.

As one embodiment, the meaning of "the first parameter group is associated with the first identifier" comprises: the first identifier is used for indicating or identifying a first PCI, the first parameter group is obtained by training based on the first training dataset, and an RS resource corresponding to the first training dataset corresponds to the first PCI; and the meaning of "the first parameter group is associated with the second identifier" comprises: the second identifier is used for indicating or identifying a second PCI, the first parameter group is obtained by training based on the first training dataset, and an RS resource corresponding to the first training dataset corresponds to the second PCI.

As one embodiment, the meaning of "an RS resource corresponding to the first training dataset corresponds to the first PCI" comprises: a PCI of any RS resource corresponding to the first training dataset is the first PCI; and the meaning of "an RS resource corresponding to the first training dataset corresponds to the second PCI" comprises: a PCI of any RS resource corresponding to the first training dataset is the second PCI.

As one embodiment, the meaning of "an RS resource corresponding to the first training dataset corresponds to the first PCI" comprises: a PCI of at least one RS resource corresponding to the first training dataset is the first PCI; and the meaning of "an RS resource corresponding to the first training dataset corresponds to the second PCI" comprises: a PCI of at least one RS resource corresponding to the first training dataset is the second PCI.

As one embodiment, the meaning of "an RS resource corresponding to the first training dataset corresponds to the first PCI" comprises: an RS resource corresponding to the first training dataset is configured with the first PCI; and the meaning of "an RS resource corresponding to the first training dataset corresponds to the second PCI" comprises: an RS resource corresponding to the first training dataset is configured with the second PCI.

### Embodiment 7

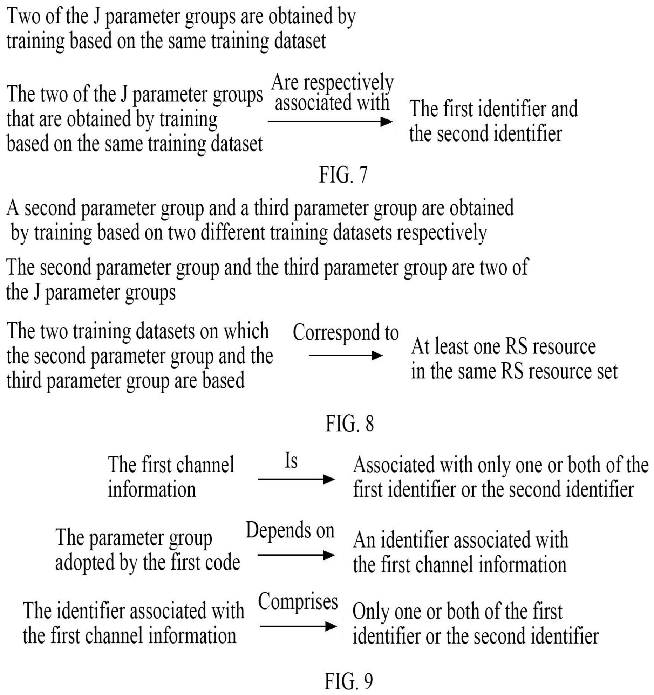

Embodiment 7 illustrates a schematic diagram of two of J parameter groups according to one embodiment of the present application, as shown in FIG. 7.

In Embodiment 7, two of the J parameter groups are obtained by training based on the same training dataset, and the two of the J parameter groups that are obtained by training based on the same training dataset are associated with the first identifier and the second identifier respectively.

As one embodiment, there exist two of the J parameter groups that are obtained by training based on the same training dataset.

As one embodiment, the two of the J parameter groups that are obtained by training based on the same training dataset are associated with the first identifier and the second identifier respectively.

As one embodiment, there exist two of the J parameter groups that are not obtained by training based on the same training dataset.

### Embodiment 8

Embodiment 8 illustrates a schematic diagram of a second parameter group and a third parameter group according to one embodiment of the present application, as shown in FIG. 8.

In Embodiment 8, the second parameter group and the third parameter group are obtained by training based on two different training datasets respectively, and the second parameter group and the third parameter group are two of the J parameter groups; and the two training datasets on which the second parameter group and the third parameter group are based correspond to at least one RS resource in the same RS resource set.

As one embodiment, the two training datasets on which the second parameter group and the third parameter group are based correspond to part or all of RS resources in the same RS resource set.

As one embodiment, the two training datasets on which the second parameter group and the third parameter group are based correspond to all RS resources in the same RS resource set.

As one embodiment, the two training datasets on which the second parameter group and the third parameter group are based correspond to at least one same RS resource in the same RS resource set.

As one embodiment, the two training datasets on which the second parameter group and the third parameter group are based correspond to one same RS resource in the same RS resource set.

As one embodiment, the two training datasets on which the second parameter group and the third parameter group are based correspond to different RS resources in the same RS resource set.

As one embodiment, RS resources corresponding to one training dataset comprise a downlink RS resource.

As one embodiment, RS resources corresponding to one training dataset comprise one or more of a CSI-RS resource, an SS/PBCH block resource, or an SRS resource.

As one embodiment, RS resources corresponding to one training dataset comprise at least one of a CSI-RS resource or an SS/PBCH block resource.

As one embodiment, RS resources corresponding to one training dataset comprise a CSI-RS resource.

As one embodiment, one training dataset comprises one or more pieces of training data.

As one embodiment, one training dataset comprises channel information obtained from the measurement for one or more RS resources.

As one embodiment, one training dataset corresponds to one or more RS resources.

As one embodiment, one training dataset corresponds to a plurality of RS resources.

As one embodiment, one piece of training data in one training dataset comprises both the input and output of the first code.

As one embodiment, one piece of training data in one training dataset comprises both the input and output of the first decode.

### Embodiment 9

FIG. 9 shows a schematic diagram of first channel information being associated with a first identifier and a second identifier according to one embodiment of the present application, as shown in FIG. 9.

In Embodiment 9, the first channel information is associated with only one or both of the first identifier or the second identifier, the parameter group adopted by the first code depends on an identifier associated with the first channel information, and the identifier associated with the first channel information comprises only one or both of the first identifier or the second identifier.

As one embodiment, the identifier associated with the first channel information comprises only one of the first identifier or the second identifier.

As one embodiment, the identifier associated with the first channel information comprises the first identifier and the second identifier.

As one embodiment, the identifier associated with the first channel information comprises only one or both of the first identifier or the second identifier.

As one embodiment, the meaning of "the parameter group adopted by the first code depends on an identifier associated with the first channel information" comprises: when the identifier associated with the first channel information is the first identifier, the parameter group adopted by the first code is one of the J parameter groups that is associated with the first identifier.

As one embodiment, the meaning of "the parameter group adopted by the first code depends on an identifier associated with the first channel information" comprises: when the identifier associated with the first channel information is the second identifier, the parameter group adopted by the first code is one of the J parameter groups that is associated with the second identifier.

As one embodiment, the meaning of "the parameter group adopted by the first code depends on an identifier associated with the first channel information" comprises: when the identifier associated with the first channel information comprises the first identifier and the second identifier, the parameter group adopted by the first code is one of the J parameter groups that is associated with the first identifier and the second identifier.

### Embodiments 10A-10F

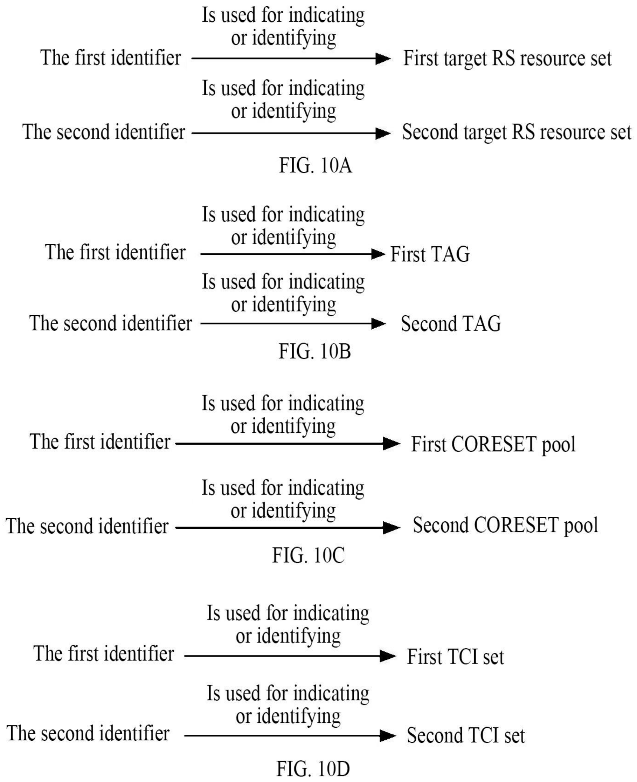

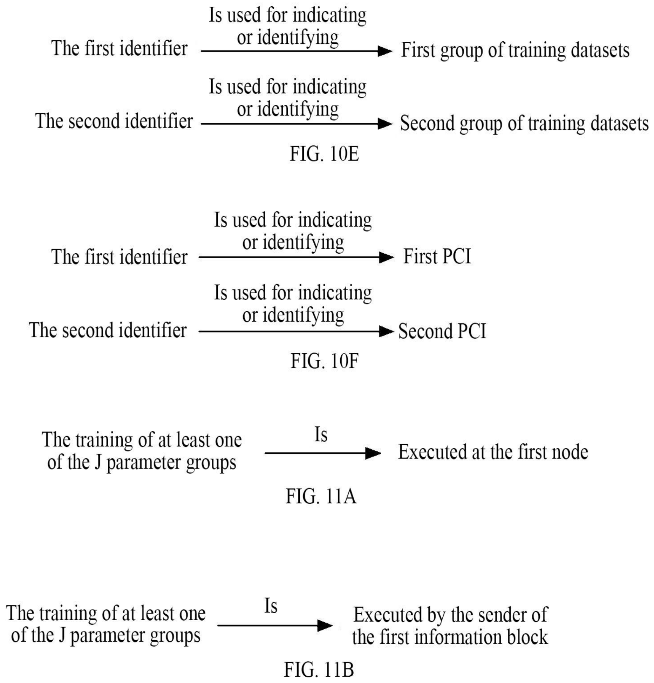

Embodiments 10A-10F respectively illustrate schematic diagrams of an identifier associated with first channel information according to one embodiment of the present application, as shown in FIGs. 10A-10F.

In Embodiment 10A, the first identifier is used for indicating or identifying a first target RS resource set, and the second identifier is used for indicating or identifying a second target RS resource set; the first target RS resource set comprises one or more RS resources, and the second target RS resource set comprises one or more RS resources; when the first RS resource set is associated with the first target RS resource set, the identifier associated with the first channel information is the first identifier; and when the first RS resource set is associated with the second target RS resource set, the identifier associated with the first channel information is the second identifier.

As one embodiment, the meaning of "the first RS resource set is associated with the first target RS resource set" comprises: any RS resource in the first RS resource set and one RS resource in the first target RS resource set are QCL; and the meaning of "the first RS resource set is associated with the second target RS resource set" comprises: any RS resource in the first RS resource set and one RS resource in the second target RS resource set are QCL.

As one embodiment, the meaning of "the first RS resource set is associated with the first target RS resource set" comprises: any RS resource in the first RS resource set and one RS resource in the first target RS resource set have the same QCL information; and the meaning of "the first RS resource set is associated with the second target RS resource set" comprises: any RS resource in the first RS resource set and one RS resource in the second target RS resource set have the same QCL information.

As one embodiment, the meaning of "the first RS resource set is associated with the first target RS resource set" comprises: QCL information of any RS resource in the first RS resource set is determined by one RS resource in the first target RS resource set; and the meaning of "the first RS resource set is associated with the second target RS resource set" comprises: QCL information of any RS resource in the first RS resource set is determined by one RS resource in the second target RS resource set.

As one embodiment, the meaning of "the first RS resource set is associated with the first target RS resource set" comprises: any RS resource in the first RS resource set belongs to the first target RS resource set; and the meaning of "the first RS resource set is associated with the second target RS resource set" comprises: any RS resource in the first RS resource set belongs to the second target RS resource set.

As one embodiment, the meaning of "the first RS resource set is associated with the first target RS resource set" comprises: at least one RS resource in the first RS resource set and one RS resource in the first target RS resource set are QCL; and the meaning of "the first RS resource set is associated with the second target RS resource set" comprises: at least one RS resource in the first RS resource set and one RS resource in the second target RS resource set are QCL.

As one embodiment, the meaning of "the first RS resource set is associated with the first target RS resource set" comprises: at least one RS resource in the first RS resource set and one RS resource in the first target RS resource set have the same QCL information; and the meaning of "the first RS resource set is associated with the second target RS resource set" comprises: at least one RS resource in the first RS resource set and one RS resource in the second target RS resource set have the same QCL information.

As one embodiment, the meaning of "the first RS resource set is associated with the first target RS resource set" comprises: QCL information of at least one RS resource in the first RS resource set is determined by one RS resource in the first target RS resource set; and the meaning of "the first RS resource set is associated with the second target RS resource set" comprises: QCL information of at least one RS resource in the first RS resource set is determined by one RS resource in the second target RS resource set.

As one embodiment, the meaning of "the first RS resource set is associated with the first target RS resource set" comprises: at least one RS resource in the first RS resource set belongs to the first target RS resource set; and the meaning of "the first RS resource set is associated with the second target RS resource set" comprises: at least one RS resource in the first RS resource set belongs to the second target RS resource set.

As one embodiment, the first target RS resource set comprises at least one RS resource comprised in a TCI state of at least one CORESET in the first CORESET pool, and the second target RS resource set comprises at least one RS resource comprised in a TCI state of at least one CORESET in the second CORESET pool.

As one embodiment, the first target RS resource set comprises at least one RS resource comprised in at least one TCI state configured for the first CORESET pool, and the second target RS resource set comprises at least one RS resource comprised in at least one TCI state configured for the second CORESET pool.

As one embodiment, the first target RS resource set comprises at least one RS resource comprised in at least one TCI state for a PDSCH transmission that is configured for the first CORESET pool, and the second target RS resource set comprises at least one RS resource comprised in at least one TCI state for a PDSCH transmission that is configured for the second CORESET pool.

As one embodiment, the first target RS resource set comprises at least one RS resource comprised in at least one TCI state in a first TCI set, and the second target RS resource set comprises at least one RS resource comprised in at least one TCI state in a second TCI set.

As one embodiment, the first target RS resource set corresponds to a first PCI, and the first target RS resource set corresponds to a second PCI.

As one embodiment, a PCI of any RS resource in the first target RS resource set is a first PCI, and a PCI of any RS resource in the first target RS resource set is a second PCI.

As one embodiment, the first target RS resource set comprises RS resources corresponding to a first group of training datasets, and the second target RS resource set comprises RS resources corresponding to a second group of training datasets, the first group of training datasets comprising one or more training datasets, and the second group of training datasets comprising one or more training datasets; and the first target RS resource set comprises RS resources corresponding to the first group of training datasets, and the second target RS resource set comprises RS resources corresponding to the second group of training datasets.

As one embodiment, the first target RS resource set comprises one or more of a CSI-RS resource, or an SS/PBCH block resource.

As one embodiment, the first target RS resource set comprises a CSI-RS resource.

As one embodiment, the first target RS resource set comprises one or more of a CSI-RS resource, an SS/PBCH block resource, or an SRS resource.

As one embodiment, the second target RS resource set comprises one or more of a CSI-RS resource, or an SS/PBCH block resource.

As one embodiment, the second target RS resource set comprises a CSI-RS resource.

As one embodiment, the second target RS resource set comprises one or more of a CSI-RS resource, an SS/PBCH block resource, or an SRS resource.

In Embodiment 10B, the first identifier is used for indicating or identifying a first TAG (Timing Advance Group), and the second identifier is used for indicating or identifying a second TAG; the first channel information is sent in the first TAG or the second TAG; when the first channel information is sent in the first TAG, the identifier associated with the first channel information is the first identifier; and when the first channel information is sent in the second TAG, the identifier associated with the first channel information is the second identifier.

As one embodiment, the first TAG comprises at least one serving cell, and the second TAG comprises at least one serving cell.

As one embodiment, at least one serving cell comprised in the first TAG adopts the same TA (Timing Advance).

As one embodiment, at least one serving cell comprised in the second TAG adopts the same TA.

As one embodiment, at least one serving cell comprised in the first TAG is a serving cell of the first node.

As one embodiment, at least one serving cell comprised in the second TAG is a serving cell of the first node.

As one embodiment, the first TAG comprises at least one {serving cell, RS resource set} pair, and the second TAG comprises at least one {serving cell, RS resource set} pair.

As one embodiment, the first TAG comprises at least one {serving cell, CORESET pool} pair, and the second TAG comprises at least one {serving cell, CORESET pool} pair.

As one embodiment, the first TAG comprises at least one {serving cell, SRS resource set} pair, and the second TAG comprises at least one {serving cell, SRS resource set} pair.

As one embodiment, TA adopted by the first TAG is different from TA adopted by the second TAG.

As one embodiment, TA adopted by the first TAG and TA adopted by the second TAG are determined respectively.

As one embodiment, TA adopted by the first TAG and TA adopted by the second TAG are indicated or determined by different MAC CEs respectively.

As one embodiment, the specific definitions of the TAG and the TA refer to Chapter 4 of 3GPP TS 38.213 and 3GPP TS 38.321.

In Embodiment 10C, the first identifier is used for indicating or identifying a first CORESET pool, and the second identifier is used for indicating or identifying a second CORESET pool; when the first information block corresponds to the first CORESET pool, the identifier associated with the first channel information is the first identifier; and when the first information block corresponds to the second CORESET pool, the identifier associated with the first channel information is the second identifier.

As one embodiment, the first information block corresponds to a first CORESET pool or a second CORESET pool.

As one embodiment, the meaning of "the first information block corresponds to the first CORESET pool" comprises: the first information block is configured to the first CORESET pool; and the meaning of "the first information block corresponds to the second CORESET pool" comprises: the first information block is configured to the second CORESET pool.

As one embodiment, the meaning of "the first information block corresponds to the first CORESET pool" comprises: the first information block belongs to configuration information of the first CORESET pool; and the meaning of "the first information block corresponds to the second CORESET pool" comprises: the first information block belongs to configuration information of the second CORESET pool.

As one embodiment, the meaning of "the first information block corresponds to the first CORESET pool" comprises: the first information block comprises an index or identifier of the first CORESET pool; and the meaning of "the first information block corresponds to the second CORESET pool" comprises: the first information block comprises an index or identifier of the second CORESET pool.

As one embodiment, an index or identifier of the first CORESET pool is one non-negative integer.

As one embodiment, an index or identifier of the first CORESET pool is one of 0 or 1.

As one embodiment, the name of an index or identifier of the first CORESET pool comprises a coresetPoolIndex.

As one embodiment, an index or identifier of the first CORESET pool is indicated by a coresetPoolIndex.

As one embodiment, an index or identifier of the second CORESET pool is one non-negative integer.

As one embodiment, an index or identifier of the second CORESET pool is one of 0 or 1.

As one embodiment, the name of an index or identifier of the second CORESET pool comprises a coresetPoolIndex.

As one embodiment, an index or identifier of the second CORESET pool is indicated by a coresetPoolIndex.

As one embodiment, an index or identifier of the first CORESET pool and an index or identifier of the second CORESET pool are indicated by different coresetPoolIndexes respectively.

As one embodiment, an index or identifier of the first CORESET pool is different from an index or identifier of the second CORESET pool.

As one embodiment, an index or identifier of the first CORESET pool is 0, and an index or identifier of the second CORESET pool is 1.

As one embodiment, an index or identifier of the first CORESET pool is 1, and an index or identifier of the second CORESET pool is 0.

As one embodiment, it comprises:
the first receiver receiving a first signaling, the first signaling being used for triggering the first channel information.

As one embodiment, the first signaling is a physical layer signaling.

As one embodiment, the first signaling is a DCI signaling.

As one embodiment, the first signaling is a DCI signaling, the first signaling comprises a CSI request field, and the CSI request field comprised in the first signaling is used for triggering the first channel information.

As one embodiment, the first signaling is used for triggering the first channel information; the meaning of "the first information block corresponds to the first CORESET pool" comprises: a CORESET where a PDCCH occupied by the first signaling is located belongs to the first CORESET pool; and the meaning of "the first information block corresponds to the second CORESET pool" comprises: a CORESET where a PDCCH occupied by the first signaling is located belongs to the second CORESET pool.

In Embodiment 10D, the first identifier is used for indicating or identifying a first TCI set, and the second identifier is used for indicating or identifying a second TCI set, the first TCI set comprising one or more TCI states, and the second TCI set comprising one or more TCI states;
when the first RS resource set is associated with the first TCI set, the identifier associated with the first channel information is the first identifier; and when the first RS resource set is associated with the second TCI set, the identifier associated with the first channel information is the second identifier;
or, when a TCI state of a CORESET corresponding to the first information block belongs to the first TCI set, the identifier associated with the first channel information is the first identifier; when the TCI state of the CORESET corresponding to the first information block belongs to the second TCI set, the identifier associated with the first channel information is the second identifier;
or, the first signaling is used for triggering the first channel information; when a TCI state of a CORESET where a PDCCH occupied by the first signaling is located belongs to the first TCI set, the identifier associated with the first channel information is the first identifier; and when the TCI state of the CORESET where the PDCCH occupied by the first signaling is located belongs to the second TCI set, the identifier associated with the first channel information is the second identifier.

As one embodiment, the first identifier is used for indicating or identifying a first TCI set, and the second identifier is used for indicating or identifying a second TCI set, the first TCI set comprising one or more TCI states, and the second TCI set comprising one or more TCI states; when the first RS resource set is associated with the first TCI set, the identifier associated with the first channel information is the first identifier; and when the first RS resource set is associated with the second TCI set, the identifier associated with the first channel information is the second identifier.

As one embodiment, the first identifier is used for indicating or identifying a first TCI set, and the second identifier is used for indicating or identifying a second TCI set, the first TCI set comprising one or more TCI states, and the second TCI set comprising one or more TCI states; when a TCI state of a CORESET corresponding to the first information block belongs to the first TCI set, the identifier associated with the first channel information is the first identifier; and when the TCI state of the CORESET corresponding to the first information block belongs to the second TCI set, the identifier associated with the first channel information is the second identifier.

As one embodiment, the first identifier is used for indicating or identifying a first TCI set, and the second identifier is used for indicating or identifying a second TCI set, the first TCI set comprising one or more TCI states, and the second TCI set comprising one or more TCI states; the first signaling is used for triggering the first channel information; when a TCI state of a CORESET where a PDCCH occupied by the first signaling is located belongs to the first TCI set, the identifier associated with the first channel information is the first identifier; and when the TCI state of the CORESET where the PDCCH occupied by the first signaling is located belongs to the second TCI set, the identifier associated with the first channel information is the second identifier.

As one embodiment, "a CORESET corresponding to the first information block" refers to: a CORESET to which the first information block is configured.

As one embodiment, the first information block belongs to configuration information of the CORESET corresponding to the first information block.

As one embodiment, "a CORESET corresponding to the first information block" refers to: an index or identifier of a CORESET comprised in the first information block.

As one embodiment, the meaning of "the first RS resource set is associated with the first TCI set" comprises: a TCI state of the first RS resource set belongs to the first TCI set; and the meaning of "the first RS resource set is associated with the second TCI set" comprises: a TCI state of the first RS resource set belongs to the second TCI set.

As one embodiment, the meaning of "the first RS resource set is associated with the first TCI set" comprises: any RS resource in the first RS resource set and one RS resource comprised in the first TCI set are QCL; and the meaning of "the first RS resource set is associated with the second target RS resource set" comprises: any RS resource in the first RS resource set and one RS resource comprised in the second TCI set are QCL.

As one embodiment, the meaning of "the first RS resource set is associated with the first target RS resource set" comprises: any RS resource in the first RS resource set and one RS resource comprised in the first TCI set have the same QCL information; and the meaning of "the first RS resource set is associated with the second target RS resource set" comprises: any RS resource in the first RS resource set and one RS resource comprised in the second TCI set have the same QCL information.

As one embodiment, the meaning of "the first RS resource set is associated with the first target RS resource set" comprises: QCL information of any RS resource in the first RS resource set is determined by one RS resource comprised in the first TCI set; and the meaning of "the first RS resource set is associated with the second target RS resource set" comprises: QCL information of any RS resource in the first RS resource set is determined by one RS resource comprised in the second TCI set.

As one embodiment, the meaning of "the first RS resource set is associated with the first target RS resource set" comprises: any RS resource in the first RS resource set belongs to one TCI state in the first TCI set; and the meaning of "the first RS resource set is associated with the second target RS resource set" comprises: any RS resource in the first RS resource set belongs to one TCI state in the second TCI set.

As one embodiment, the meaning of "the first RS resource set is associated with the first TCI set" comprises: a TCI state of at least one RS resource in the first RS resource set belongs to the first TCI set; and the meaning of "the first RS resource set is associated with the second TCI set" comprises: a TCI state of at least one RS resource in the first RS resource set belongs to the second TCI set.

As one embodiment, the meaning of "the first RS resource set is associated with the first TCI set" comprises: at least one RS resource in the first RS resource set and at least one RS resource comprised in the first TCI set are QCL; and the meaning of "the first RS resource set is associated with the second target RS resource set" comprises: at least one RS resource in the first RS resource set and at least one RS resource comprised in the second TCI set are QCL.

As one embodiment, the meaning of "the first RS resource set is associated with the first target RS resource set" comprises: at least one RS resource in the first RS resource set and at least one RS resource comprised in the first TCI set have the same QCL information; and the meaning of "the first RS resource set is associated with the second target RS resource set" comprises: at least one RS resource in the first RS resource set and at least one RS resource comprised in the second TCI set have the same QCL information.

As one embodiment, the meaning of "the first RS resource set is associated with the first target RS resource set" comprises: QCL information of at least one RS resource in the first RS resource set is determined by at least one RS resource comprised in the first TCI set; and the meaning of "the first RS resource set is associated with the second target RS resource set" comprises: QCL information of at least one RS resource in the first RS resource set is determined by at least one RS resource comprised in the second TCI set.

As one embodiment, the meaning of "the first RS resource set is associated with the first target RS resource set" comprises: at least one RS resource in the first RS resource set belongs to at least one TCI state in the first TCI set; and the meaning of "the first RS resource set is associated with the second target RS resource set" comprises: at least one RS resource in the first RS resource set belongs to at least one TCI state in the second TCI set.

In Embodiment 10E, the first identifier is used for indicating or identifying a first group of training datasets, and the second identifier is used for indicating or identifying a second group of training datasets, the first group of training datasets comprising one or more training datasets, and the second group of training datasets comprising one or more training datasets; the first target RS resource set comprises RS resources corresponding to the first group of training datasets, and the second target RS resource set comprises RS resources corresponding to the second group of training datasets; the first target RS resource set comprises one or more RS resources, and the second target RS resource set comprises one or more RS resources; when the first RS resource set is associated with the first target RS resource set, the identifier associated with the first channel information is the first identifier; and when the first RS resource set is associated with the second target RS resource set, the identifier associated with the first channel information is the second identifier.

In Embodiment 10F, the first identifier is used for indicating or identifying a first PCI (Physical Cell Identity), and the second identifier is used for indicating or identifying a second PCI; when the first RS resource set corresponds to the first PCI, the identifier associated with the first channel information is the first identifier; and when the first RS resource set corresponds to the second PCI, the identifier associated with the first channel information is the second identifier.

As one embodiment, the meaning of "the first RS resource set corresponds to the first PCI" comprises: a PCI of any RS resource in the first RS resource set is the first PCI; and the meaning of "the first RS resource set corresponds to the second PCI" comprises: a PCI of any RS resource in the first RS resource set is the second PCI.

As one embodiment, the meaning of "the first RS resource set corresponds to the first PCI" comprises: a PCI of at least one RS resource in the first RS resource set is the first PCI; and the meaning of "the first RS resource set corresponds to the second PCI" comprises: a PCI of at least one RS resource in the first RS resource set is the second PCI.

As one embodiment, the meaning of "the first RS resource set corresponds to the first PCI" comprises: the first RS resource set is configured with the first PCI; and the meaning of "the first RS resource set corresponds to the second PCI" comprises: the first RS resource set is configured with the second PCI.

### Embodiments 11A-11C

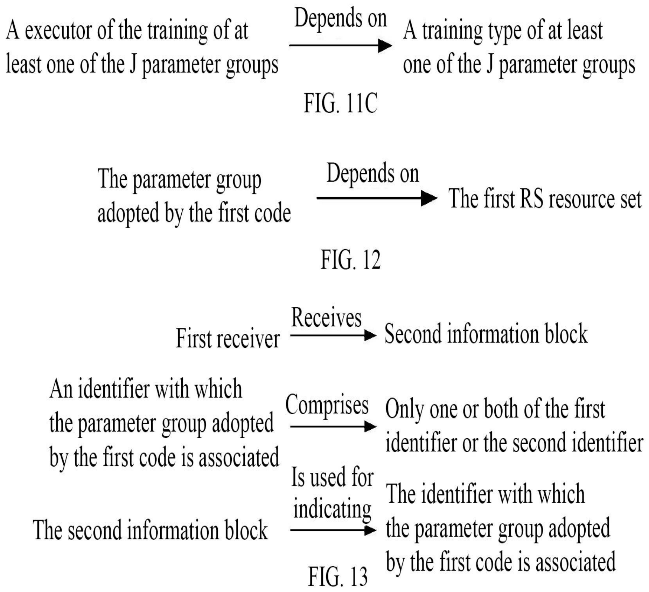

Embodiments 11A-11C respectively illustrate schematic diagrams of an executor of training of at least one of J parameter groups according to one embodiment of the present application, as shown in FIGs. 11A-11C.

In Embodiment 11A, the training of at least one of the J parameter groups is executed at the first node.

As one embodiment, training of each of the J parameter groups is executed at the first node.

As one embodiment, training of part of the J parameter groups is executed at the first node.

In Embodiment 11B, the training of at least one of the J parameter groups is executed by the sender of the first information block.

As one embodiment, the training of each of the J parameter groups is executed by the sender of the first information block.

As one embodiment, the training of part of the J parameter groups is executed by the sender of the first information block.

In Embodiment 11C, an executor of the training of at least one of the J parameter groups depends on a training type of at least one of the J parameter groups.

As one embodiment, whether an executor of the training of at least one of the J parameter groups is the first node or a sender of the first information block depends on a training type of at least one of the J parameter groups.

As one embodiment, an executor of the training of each of the J parameter groups depends on a training type of at least one of the J parameter groups.

As one embodiment, an executor of the training of part of the J parameter groups depends on a training type of at least one of the J parameter groups.

As one embodiment, when a training type of at least one of the J parameter groups is a first reference type in a first type set, an executor of the training of at least one of the J parameter groups is the first node; and when the training type of the at least one of the J parameter groups is a second reference type in the first type set, the executor of the training of the at least one of the J parameter groups is a sender of the first information block and the first type set comprises a plurality of training types, and the first reference type and the second reference type are two different training types in the first type set.

As one sub-embodiment of the above embodiment, the first reference type comprises that the first code is trained, or generated, or maintained in the first node, and the second reference type comprises that the first code is trained, or generated, or maintained in the sender of the first information block.

As one sub-embodiment of the above embodiment, the first reference type is a Type 1 and the first code is trained, or generated, or maintained in the first node, and the second reference type is a Type 1 and the first code is trained, or generated, or maintained in the sender of the first information block.

As one sub-embodiment of the above embodiment, the first reference type is a Type 1 and the first code is trained, or generated, or maintained in the first node, and the second reference type is a Type 2.

As one sub-embodiment of the above embodiment, the first reference type is a Type 3, the second reference type is a Type 1 and the first code is trained, or generated, or maintained in the sender of the first information block.

As one sub-embodiment of the above embodiment, the first reference type is a Type 3, and the second reference type is a Type 2.

As one embodiment, when a training type of at least one of the J parameter groups is a first reference type in a first type set, an executor of the training of at least one of the J parameter groups is the first node; and when the training type of the at least one of the J parameter groups is a second reference type in the first type set, the executor of the training of the at least one of the J parameter groups comprises the first node and a sender of the first information block; and the first type set comprises a plurality of training types, and the first reference type and the second reference type are two different training types in the first type set.

As one sub-embodiment of the above embodiment, the first reference type comprises that the first code is trained, or generated, or maintained in the first node, and the second reference type comprises that the first code is jointly trained, or generated, or maintained in the first node and the sender of the first information block.

As one sub-embodiment of the above embodiment, the first reference type is a Type 1 and the first code is trained, or generated, or maintained in the first node, and the second reference type is a Type 2.

As one sub-embodiment of the above embodiment, the first reference type is a Type 3, and the second reference type is a Type 2.

As one embodiment, when a training type of at least one of the J parameter groups is a first reference type in a first type set, an executor of the training of at least one of the J parameter groups comprises the first node and a sender of the first information block; when the training type of the at least one of the J parameter groups is a second reference type in the first type set, the executor of the training of the at least one of the J parameter groups is a sender of the first information block and the first type set comprises a plurality of training types, and the first reference type and the second reference type are two different training types in the first type set.

As one sub-embodiment of the above embodiment, the first reference type comprises that the first code is jointly trained, or generated, or maintained in the first node and the sender of the first information block, and the second reference type comprises that the first code is trained, or generated, or maintained in the sender of the first information block.

As one sub-embodiment of the above embodiment, the first reference type is a Type 2, the second reference type is a Type 1 and the first code is trained, or generated, or maintained in the sender of the first information block.

### Embodiment 12

Embodiment 12 illustrates a schematic diagram of a parameter group adopted by a first code according to one embodiment of the present application, as shown in FIG. 12.

In Embodiment 12, the parameter group adopted by the first code depends on the first RS resource set.

As one embodiment, the parameter group adopted by the first code depends on the first RS resource set.

As one embodiment, when the first RS resource set is associated with a first target RS resource set, the identifier associated with the first channel information is the first identifier; when the first RS resource set is associated with a second target RS resource set, the identifier associated with the first channel information is the second identifier; and the first target RS resource set comprises one or more RS resources, and the second target RS resource set comprises one or more RS resources.

As one embodiment, when the first RS resource set is associated with a first TCI set, the identifier associated with the first channel information is the first identifier; and when the first RS resource set is associated with a second TCI set, the identifier associated with the first channel information is the second identifier; and the first TCI set comprises one or more TCI states, and the second TCI set comprises one or more TCI states.

As one embodiment, when the first RS resource set corresponds to a first PCI, the identifier associated with the first channel information is the first identifier; when the first RS resource set corresponds to a second PCI, the identifier associated with the first channel information is the second identifier; and the first PCI and the second PCI are different PCIs.

As one embodiment, when the first RS resource set is associated with a first TAG, the identifier associated with the first channel information is the first identifier; when the first RS resource set is associated with a second TAG, the identifier associated with the first channel information is the second identifier; and the first TAG comprises at least one serving cell, and the second TAG comprises at least one serving cell.

As one embodiment, the meaning of "when the first RS resource set is associated with a first TAG" comprises: the first RS resource set belongs to the first TAG; and the meaning of "when the first RS resource set is associated with a second TAG" comprises: the first RS resource set belongs to the second TAG.

As one embodiment, the meaning of "when the first RS resource set is associated with a first TAG" comprises: the first RS resource set belongs to at least one serving cell comprised in the first TAG; and the meaning of "when the first RS resource set is associated with a second TAG" comprises: the first RS resource set belongs to at least one serving cell comprised in the second TAG.

As one embodiment, the meaning of "when the first RS resource set is associated with a first TAG" comprises: any RS resource in the first RS resource set belongs to the first TAG; and the meaning of "when the first RS resource set is associated with a second TAG" comprises: any RS resource in the first RS resource set belongs to the second TAG.

As one embodiment, the meaning of "when the first RS resource set is associated with a first TAG" comprises: any RS resource in the first RS resource set belongs to at least one serving cell comprised in the first TAG; and the meaning of "when the first RS resource set is associated with a second TAG" comprises: any RS resource in the first RS resource set belongs to at least one serving cell comprised in the second TAG.

As one embodiment, the meaning of "the first RS resource set is associated with a first TAG" comprises: at least one RS resource in the first RS resource set belongs to the first TAG; and the meaning of "when the first RS resource set is associated with a second TAG" comprises: at least one RS resource in the first RS resource set belongs to the second TAG.

As one embodiment, the meaning of "the first RS resource set is associated with a first TAG" comprises: at least one RS resource in the first RS resource set belongs to at least one serving cell comprised in the first TAG; and the meaning of "when the first RS resource set is associated with a second TAG" comprises: at least one RS resource in the first RS resource set belongs to at least one serving cell comprised in the second TAG.

As one embodiment, when the first RS resource set is associated with a first CORESET pool, the identifier associated with the first channel information is the first identifier; and when the first RS resource set is associated with a second CORESET pool, the identifier associated with the first channel information is the second identifier.

As one embodiment, the meaning of "when the first RS resource set is associated with a first CORESET pool" comprises: the first information block is used for indicating the first RS resource set, and the first information block corresponds to the first CORESET pool; and the meaning of "when the first RS resource set is associated with a second CORESET pool" comprises: the first information block is used for indicating the first RS resource set, and the first information block corresponds to the second CORESET pool.

As one embodiment, when the first RS resource set is associated with a first group of training datasets, the identifier associated with the first channel information is the first identifier; and when the first RS resource set is associated with a second group of training datasets, the identifier associated with the first channel information is the second identifier.

As one embodiment, the meaning of "when the first RS resource set is associated with a first group of training datasets" comprises: the first RS resource set is associated with the first target RS resource set, and the first target RS resource set comprises RS resources corresponding to the first group of training datasets; and the meaning of "when the first RS resource set is associated with a second group of training datasets" comprises: the first RS resource set is associated with the second target RS resource set, and the second target RS resource set comprises RS resources corresponding to the second group of training datasets.

As one embodiment, when the identifier associated with the first channel information is the first identifier, the parameter group adopted by the first code is one of the J parameter groups that is associated with the first identifier.

As one embodiment, when the identifier associated with the first channel information is the second identifier, the parameter group adopted by the first code is one of the J parameter groups that is associated with the second identifier.

As one embodiment, the meaning of "the parameter group adopted by the first code depends on the first RS resource set" comprises: when the first RS resource set is associated with a first target RS resource set, the parameter group adopted by the first code is one of the J parameter groups that is associated with the first identifier; and when the first RS resource set is associated with a second target RS resource set, the parameter group adopted by the first code is one of the J parameter groups that is associated with the second identifier.

As one embodiment, the meaning of "the parameter group adopted by the first code depends on the first RS resource set" comprises: when the first RS resource set is associated with a first TCI set, the parameter group adopted by the first code is one of the J parameter groups that is associated with the first identifier; and when the first RS resource set is associated with a second TCI set, the parameter group adopted by the first code is one of the J parameter groups that is associated with the second identifier.

As one embodiment, the meaning of "the parameter group adopted by the first code depends on the first RS resource set" comprises: when the first RS resource set corresponds to a first PCI, the parameter group adopted by the first code is one of the J parameter groups that is associated with the first identifier; and when the first RS resource set corresponds to a second PCI, the parameter group adopted by the first code is one of the J parameter groups that is associated with the second identifier.

As one embodiment, the meaning of "the parameter group adopted by the first code depends on the first RS resource set" comprises: when the first RS resource set is associated with a first TAG, the parameter group adopted by the first code is one of the J parameter groups that is associated with the first identifier; and when the first RS resource set is associated with a second TAG, the parameter group adopted by the first code is one of the J parameter groups that is associated with the second identifier.

As one embodiment, the meaning of "the parameter group adopted by the first code depends on the first RS resource set" comprises: when the first RS resource set is associated with a first CORESET pool, the parameter group adopted by the first code is one of the J parameter groups that is associated with the first identifier; and when the first RS resource set is associated with a second CORESET pool, the parameter group adopted by the first code is one of the J parameter groups that is associated with the second identifier.

As one embodiment, the meaning of "the parameter group adopted by the first code depends on the first RS resource set" comprises: when the first RS resource set is associated with a first group of training datasets, the parameter group adopted by the first code is one of the J parameter groups that is associated with the first identifier; and when the first RS resource set is associated with a second group of training datasets, the parameter group adopted by the first code is one of the J parameter groups that is associated with the second identifier.

### Embodiment 13

Embodiment 13 illustrates a schematic diagram of a second information block according to one embodiment of the present application, as shown in FIG. 13.

In Embodiment 13, the first receiver in the present application receives a second information block,
wherein an identifier with which the parameter group adopted by the first code is associated comprises only one or both of the first identifier or the second identifier, and the second information block is used for indicating the identifier with which the parameter group adopted by the first code is associated.

As one embodiment, an identifier with which the parameter group adopted by the first code is associated comprises only one of the first identifier or the second identifier.

As one embodiment, an identifier with which the parameter group adopted by the first code is associated comprises the first identifier.

As one embodiment, an identifier with which the parameter group adopted by the first code is associated comprises the second identifier.

As one embodiment, an identifier with which the parameter group adopted by the first code is associated comprises the first identifier and a second identifier.

As one embodiment, the second information block is borne by a higher layer signaling.

As one embodiment, the second information block is borne by an RRC signaling.

As one embodiment, the second information block is borne by an MAC CE signaling.

As one embodiment, the second information block comprises part or all of fields in one RRC IE.

As one embodiment, the second information block comprises part of fields in one RRC IE.

As one embodiment, the second information block and the first information block belong to the same RRC IE.

As one embodiment, the second information block and the first information block belong to different RRC IEs.

As one embodiment, the second information block and the first information block belong to one CSI-ReportConfig.

As one embodiment, the second information block and the first information block are simultaneously received.

As one embodiment, the second information block and the first information block are not simultaneously received.

As one embodiment, the second information block is received later than the first information block.

As one embodiment, the second information block is received not later than the first information block.

As one embodiment, the second information block indicates that the identifier with which the parameter group adopted by the first code is associated is the first identifier.

As one embodiment, the second information block indicates that the identifier with which the parameter group adopted by the first code is associated is the second identifier.

As one embodiment, the second information block indicates that the identifier with which the parameter group adopted by the first code is associated is the first identifier and the second identifier.

### Embodiment 14

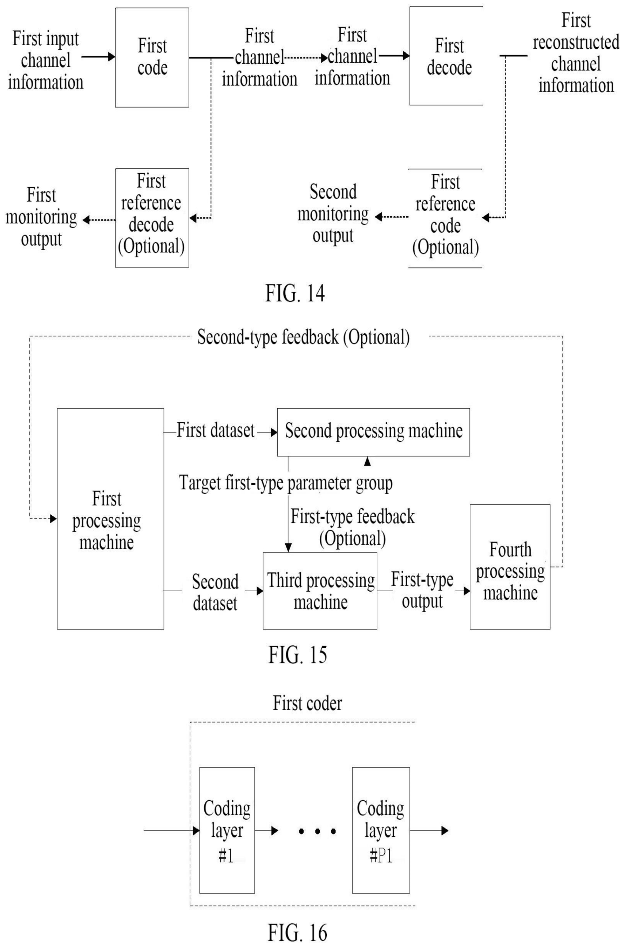

Embodiment 14 illustrates a flowchart of a transmission of first channel information according to one embodiment of the present application, as shown in FIG. 14. In FIG. 14, a first reference decode is optional, and a first reference code is optional.

In Embodiment 14, a first code is executed in the first node and the second node in the present application, and a first decode is executed in the first node and the second node in the present application respectively.

The first code is used for generating the first channel information, the input of the first code comprises first input channel information, and the measurement for at least one RS resource in the first RS resource set is used for generating the first input channel information;
the first node sends the first channel information to the second node through an air interface; and
a first decode is used for generating first reconstructed channel information, and the input of the first decode comprises the first channel information, or the first channel information is used for generating the input of the first decode.

As one embodiment, the second node is a sender of the first information block in the present application.

As one embodiment, the measurement for each RS resource in the first RS resource set is used for generating the first input channel information.

As one embodiment, the measurement for part of RS resources in the first RS resource set is used for generating the first input channel information.

As one embodiment, the measurement for one RS resource in the first RS resource set is used for generating the first input channel information.

As one embodiment, the first input channel information comprises a channel parameter matrix.

As one embodiment, the first input channel information comprises a matrix consisting of at least one eigenvector.

As one embodiment, the first input channel information comprises at least one eigenvector.

As one embodiment, the first input channel information comprises a channel parameter matrix obtained by the measurement for at least one RS resource in the first RS resource set.

As one embodiment, the first input channel information comprises a matrix consisting of at least one eigenvector generated by the measurement for at least one RS resource in the first RS resource set.

As one embodiment, the first input channel information comprises at least one eigenvector generated by the measurement for at least one RS resource in the first RS resource set.

As one embodiment, the first input channel information comprises only one channel parameter matrix.

As one embodiment, the first input channel information comprises a plurality of channel parameter matrices, and the plurality of channel parameter matrices respectively correspond to a plurality of subbands.

As one embodiment, the first input channel information is generated by the measurement for the same RS resource in the first RS resource set.

As one embodiment, the first input channel information comprises a plurality of channel parameter matrices, and the plurality of channel parameter matrices are respectively generated by the measurement for different RS resources in the first RS resource set.

As one embodiment, the second node is the second node in the present application.

As one embodiment, the first node further executes a first reference decode, the input of the first reference decode comprises the first channel information, and the output of the first reference decode comprises a first monitoring output.

As one embodiment, the second node further executes a first reference code, the input of the first reference code comprises the first reconstructed channel information, and the output of the first reference code comprises a second monitoring output.

As one embodiment, the first code is used for CSI generation executed at the first node, and the CSI generation executed at the first node comprises generating the first channel information.

As one embodiment, CSI generation executed at the first node comprises CSI compression executed at the first node, and the CSI compression executed at the first node comprises generating the first channel information.

As one embodiment, the first reference code is used for CSI generation executed at the second node, and the CSI generation executed at the second node comprises generating the second monitoring output.

As one embodiment, CSI generation executed at the second node comprises CSI compression executed at the second node, and the CSI compression executed at the second node comprises generating the second monitoring output.

As one embodiment, the first decode is used for CSI reconstruction executed at the second node, and the CSI reconstruction executed at the second node comprises generating the first reconstructed channel information.

As one embodiment, the first decode executes an inverse operation of the first code.

As one embodiment, the first reference decode executes an inverse operation of the first code.

As one embodiment, the first reference code executes an inverse operation of the first decode.

As one embodiment, the first reference decode is used for CSI reconstruction executed at the first node, and the CSI reconstruction executed at the first node comprises generating the first monitoring output.

As one embodiment, the first monitoring output is different from the first input channel information.

As one embodiment, the meaning of "the first monitoring output is different from the first input channel information" comprises: the first monitoring output and the first input channel information cannot be considered the same.

As one embodiment, the first monitoring output comprises the first input channel information.

As one embodiment, the first monitoring output comprises an estimation of the first input channel information.

As one embodiment, an error between the first monitoring output and the first input channel information may be used for monitoring the performance of the first code. Common errors may be a mean squared error, a cosine similarity, etc.

As one embodiment, an error between the first monitoring output and the first input channel information may be used for training at least one of the first code or the first reference decode.

As one embodiment, the second monitoring output comprises the first channel information.

As one embodiment, the second monitoring output is the same as the first channel information.

As one embodiment, the second monitoring output is different from the first channel information.

As one embodiment, the meaning of "the second monitoring output is different from the first channel information" comprises: the second monitoring output and the first channel information cannot be considered the same.

As one embodiment, an error between the second monitoring output and the first channel information may be used for monitoring the performance of the first decode. Common errors may be a mean squared error, a cosine similarity, etc.

As one embodiment, an error between the second monitoring output and the first channel information may be used for training at least one of the first decode or the first code.

As one embodiment, the first code is executed in a first receiver.

As one embodiment, the first code is executed in a first transmitter.

As one embodiment, the first code is executed in at least one of a first receiver or a first transmitter.

As one embodiment, the first reference decode is executed in a first receiver.

As one embodiment, the first reference decode is executed in a first transmitter.

As one embodiment, the first reference decode is executed in at least one of a first receiver or a first transmitter.

As one embodiment, the first decode is executed in a second receiver.

As one embodiment, the first reference code is executed in a second receiver.

As one embodiment, the first reference code is executed in a second transmitter.

As one embodiment, the first reference code is executed in at least one of a second receiver or a second transmitter.

As one embodiment, the first decode is the same as the first reference decode.

As one embodiment, the first decode is different from the first reference decode.

As one embodiment, the meaning of "the first decode is different from the first reference decode" comprises: the first decode and the first reference decode cannot be considered the same.

As one embodiment, the first reference decode and the first decode both execute an inverse operation of the first code, but the two may only be approximate.

As one embodiment, the first reference decode is the same as the first decode, and the first reference decode is available at both the first node and the second node.

As one embodiment, the first reference decode is available only to the first node.

As one embodiment, the above method allows the first node and the second node to adopt different decodes to process the first channel information, thereby improving the implementation flexibility for hardware manufacturers.

As one embodiment, the first code is the same as the first reference code.

As one embodiment, the first code is different from the first reference code.

As one embodiment, the meaning of "the first code is different from the first reference code" comprises: the first code and the first reference code cannot be considered the same.

As one embodiment, the first reference code and the first code both execute an inverse operation of the first decode, but the two may only be approximate.

As one embodiment, the first reference code is the same as the first code, and the first reference code is available at both the first node and the second node.

As one embodiment, the first reference code is available only to the second node.

As one embodiment, the above method allows the first node and the second node to adopt different codes, thereby improving the implementation flexibility for hardware manufacturers.

As one embodiment, an output after the first input channel information is input into the first code comprises the first channel information.

As one embodiment, an output after the first input channel information is input into the first code is used for generating the first channel information.

As one embodiment, the meaning of "the first code is used for generating the first channel information" comprises: the output of the first code comprises the first channel information.

As one embodiment, the meaning of "the first code is used for generating the first channel information" comprises: the output of the first code is used for generating the first channel information.

As one embodiment, the meaning of the sentence "an output of the first code is used for generating the first channel information" comprises: the first channel information is calculated based on the output of the first code.

As one embodiment, the meaning of the sentence "an output of the first code is used for generating the first channel information" comprises: the first channel information is the quantized output obtained by taking the output of the first code as a quantized input.

As one embodiment, the meaning of the sentence "an output of the first code is used for generating the first channel information" comprises: the first channel information is an output of the function obtained by taking the output of the first code as an input of a function.

As one embodiment, the meaning of the sentence "an output of the first code is used for generating the first channel information" comprises: the first channel information is an output of the transform obtained by taking the output of the first code as an input of a transform.

As one embodiment, the meaning of "the first channel information is used for generating the input of the first decode" comprises: the first channel information is dequantized and then input into the first decode.

As one embodiment, the meaning of "the first channel information is used for generating the input of the first decode" comprises: the input of the first decode comprises the output after the first channel information is input into one function.

As one embodiment, the meaning of "the first channel information is used for generating the input of the first decode" comprises: the input of the first decode comprises a result after the first channel information is transformed.

As one embodiment, the first input channel information is available only to the first node.

As one embodiment, the meaning of the sentence "the first input channel information is available only to the first node" comprises: in both the first node and the second node, the first input channel information is available only to the first node.

As one embodiment, the meaning of the sentence "the first input channel information is available only to the first node" comprises: the first input channel information is generated at the first node, and the first node does not send the first input channel information through an air interface.

As one embodiment, the meaning of the sentence "the first input channel information is available only to the first node" comprises: the first input channel information is generated at the first node, and the first node does not send information through an air interface that can be used for fully reconstructing the first input channel information.

As one embodiment, the meaning of the sentence "the first input channel information is available only to the first node" comprises: the first input channel information is generated at the first node, and the second node does not obtain the first input channel information.

As one embodiment, the first reconstructed channel information is known only to the second node.

As one embodiment, the first reconstructed channel information is the same as the first input channel information.

As one embodiment, the first reconstructed channel information is different from the first input channel information.

As one embodiment, the meaning of "the first reconstructed channel information is different from the first input channel information" comprises: the first reconstructed channel information and the first input channel information cannot be considered the same.

As one embodiment, when the first reference decode is the same as the first decode, the first reconstructed channel information is the same as the first input channel information.

As one embodiment, when the first reference decode is different from the first decode, the first reconstructed channel information is different from the first input channel information.

As one embodiment, the first code is obtained by training.

As one embodiment, the first code adopts an artificial intelligence-based method.

As one embodiment, the training of the first code is executed at the first node.

As one embodiment, the training of the first code is executed at the second node.

As one embodiment, the training for the first code is used for obtaining the first code.

As one embodiment, the training for the first code is used for obtaining the first code and the first reference code.

As one embodiment, the training for the first code is used for obtaining the first code and the first reference decode.

As one embodiment, the training for the first code is used for obtaining the first code and the first decode.

As one embodiment, the training for the first code is used for obtaining at least the first code among the first code, the first reference decode, the first decode, or the first reference code.

As one embodiment, the training for the first code is used for obtaining the first code, the first reference decode, the first decode, and the first reference code.

As one embodiment, the first decode is obtained by training. f

As one embodiment, the first decode adopts an artificial intelligence-based method.

As one embodiment, the training of the first decode is executed at the first node.

As one embodiment, the training of the first decode is executed at the second node.

As one embodiment, the first reference code is obtained by training.

As one embodiment, the first reference code adopts an artificial intelligence-based method.

As one embodiment, the training of the first reference code is executed at the first node.

As one embodiment, the training of the first reference code is executed at the second node.

As one embodiment, the first reference decode is obtained by training.

As one embodiment, the first reference decode adopts an artificial intelligence-based method.

As one embodiment, the training of the first reference decode is executed at the first node.

As one embodiment, the training of the first reference decode is executed at the second node.

As one embodiment, the first reference decode is the same as the first decode, and the first decode is trained, or generated, or maintained in only one of the first node or the second node.

As one embodiment, the first reference decode and the first decode are trained, or generated, or maintained in only one of the first node or the second node.

As one embodiment, the first reference decode and the first decode are separately or independently trained, or generated, or maintained in the first node and the second node, respectively.

As one embodiment, the first reference code is the same as the first code, and the first code is trained, or generated, or maintained in only one of the first node or the second node.

As one embodiment, the first reference code and the first code are trained, or generated, or maintained in only one of the first node or the second node.

As one embodiment, the first reference code and the first code are separately or independently trained, or generated, or maintained in the second node and the first node, respectively.

As one embodiment, the first code and the first decode are jointly trained, or generated, or maintained in only one of the first node or the second node.

As one embodiment, the first code and the first decode are jointly trained, or generated, or maintained in the first node and the second node.

As one embodiment, the first code and the first decode are separately or independently trained, or generated, or maintained in the first node and the second node, respectively.

As one embodiment, the specific operation of the first code is self-determined by an equipment manufacturer.

As one embodiment, the specific operation of the first code is self-determined by the first node or the second node.

As one embodiment, an artificial intelligence algorithm adopted by the first code is self-determined by an equipment manufacturer.

As one embodiment, an artificial intelligence algorithm adopted by the first code is self-determined by the first node or the second node.

As one embodiment, the specific operation of the first decode is self-determined by an equipment manufacturer.

As one embodiment, the specific operation of the first decode is self-determined by the first node or the second node.

As one embodiment, an artificial intelligence algorithm adopted by the first decode is self-determined by an equipment manufacturer.

As one embodiment, an artificial intelligence algorithm adopted by the first decode is self-determined by the first node or the second node.

As one embodiment, the specific operation of the first reference code is self-determined by an equipment manufacturer.

As one embodiment, the specific operation of the first reference code is self-determined by the first node or the second node.

As one embodiment, an artificial intelligence algorithm adopted by the first reference code is self-determined by an equipment manufacturer.

As one embodiment, an artificial intelligence algorithm adopted by the first reference code is self-determined by the first node or the second node.

As one embodiment, the specific operation of the first reference decode is self-determined by an equipment manufacturer.

As one embodiment, the specific operation of the first reference decode is self-determined by the first node or the second node.

As one embodiment, an artificial intelligence algorithm adopted by the first reference decode is self-determined by an equipment manufacturer.

As one embodiment, an artificial intelligence algorithm adopted by the first reference decode is self-determined by the first node or the second node.

As one embodiment, the training of the first code comprises obtaining a parameter set adopted by the first code by training.

As one embodiment, the training of the first code comprises obtaining at least one of J parameter groups by training, and a parameter group adopted by the first code is one of the J parameter groups, J is a positive integer greater than 1.

As one embodiment, the training of the first code comprises obtaining J parameter groups by training, and a parameter group adopted by the first code is one of the J parameter groups, J being a positive integer greater than 1.

As one embodiment, a parameter group adopted by the first code is one of J parameter groups, J being a positive integer greater than 1.

As one embodiment, the J parameter groups are used for describing J models respectively.

As one embodiment, the J parameter groups comprise J models respectively.

As one embodiment, the J parameter groups are J models respectively.

As one embodiment, the J models are J CSI generation models respectively.

As one embodiment, the J parameter groups are different from each other.

As one embodiment, the J parameter groups are self-determined by an equipment manufacturer.

As one embodiment, the J parameter groups are self-determined by the first node or the second node.

As one embodiment, at least one of the J parameter groups is predefined.

As one embodiment, at least one of the J parameter groups is self-determined by the first node.

As one embodiment, at least one of the J parameter groups is sent by the second node to the first node.

As one embodiment, the first node sends at least one of the J parameter groups to the second node.

As one embodiment, at least one of the J parameter groups is obtained by training.

As one embodiment, each of the J parameter groups is obtained by training.

As one embodiment, part of the J parameter groups are obtained by training.

As one embodiment, part or all of the J parameter groups are obtained by training.

As one embodiment, a parameter group adopted by the first code is obtained by training.

As one embodiment, a parameter group adopted by the first code comprises one parameter or more parameters.

As one embodiment, a parameter group adopted by the first code is used for describing the first code.

As one embodiment, a parameter group adopted by the first code is used for describing a model adopted by the first code.

As one embodiment, a parameter group adopted by the first code comprises a model adopted by the first code.

As one embodiment, a parameter group adopted by the first code is a model adopted by the first code.

As one embodiment, a model adopted by the first code is one CSI generation model.

As one embodiment, the training of the first decode comprises obtaining a parameter group adopted by the first decode by training.

As one embodiment, the training of the first decode comprises obtaining at least one of P parameter groups by training, and a parameter group adopted by the first decode is one of the P parameter groups, P being a positive integer.

As one embodiment, the training of the first decode comprises obtaining P parameter groups by training, and a parameter group adopted by the first decode is one of the P parameter groups, P being a positive integer.

As one embodiment, the P is equal to 1.

As one embodiment, P is greater than 1, and the P parameter groups are different from each other.

As one embodiment, a parameter group adopted by the first decode is one of P parameter groups, P being a positive integer.

As one embodiment, the P parameter groups are used for describing P models respectively.

As one embodiment, the P parameter groups comprise P models respectively.

As one embodiment, the P parameter groups are P models respectively.

As one embodiment, the P models are P CSI reconstruction models respectively.

As one embodiment, at least one of the P parameter groups is predefined.

As one embodiment, at least one of the P parameter groups is self-determined by the second node.

As one embodiment, at least one of the P parameter groups is sent by the first node to the second node.

As one embodiment, the second node sends at least one of the P parameter groups to the first node.

As one embodiment, at least one of the P parameter groups is obtained by training.

As one embodiment, each of the P parameter groups is obtained by training.

As one embodiment, part of the P parameter groups are obtained by training.

As one embodiment, part or all of the P parameter groups are obtained by training.

As one embodiment, a parameter group adopted by the first code comprises at least one parameter in Embodiment 16.

As one embodiment, a parameter group adopted by the first code comprises the quantity of coding layers and comprises which one or more of {a fully connected layer, a convolutional layer, and a pooling layer}.

As one embodiment, a parameter group adopted by the first code comprises at least one of the quantity of coding layers, the size of input parameters of the coding layers, or the size of output parameters of the coding layers.

As one embodiment, a parameter group adopted by the first code comprises at least one of the quantity of coding layers, the size of input parameters of the coding layers, the size of output parameters of the coding layers, the threshold of an activation function, the size of a convolution kernel, the stride of the convolution kernel, or the weight between feature maps.

As one embodiment, at least one of the J parameter groups comprises at least one parameter in Embodiment 16.

As one embodiment, at least one of the J parameter groups comprises the quantity of coding layers, and comprises which one or more of {a fully connected layer, a convolutional layer, and a pooling layer}.

As one embodiment, at least one of the J parameter groups comprises at least one of the quantity of coding layers, the size of input parameters of the coding layers, or the size of output parameters of the coding layers.

As one embodiment, at least one of the J parameter groups comprises at least one of the quantity of coding layers, the size of input parameters of the coding layer, the size of output parameters of the coding layer, the threshold of an activation function, the size of a convolution kernel, the step size of the convolution kernel, or the weight between feature maps.

As one embodiment, any one of the J parameter groups comprises at least one parameter in Embodiment 16.

As one embodiment, any one of the J parameter groups comprises the quantity of coding layers, and comprises which one or more of {a fully connected layer, a convolutional layer, and a pooling layer}.

As one embodiment, any one of the J parameter groups comprises at least one of the quantity of coding layers, the size of input parameters of the coding layers, or the size of output parameters of the coding layers.

As one embodiment, any one of the J parameter groups comprises at least one of the quantity of coding layers, the size of input parameters of the coding layers, the size of output parameters of the coding layers, the threshold of an activation function, the size of a convolution kernel, the stride of the convolution kernel, or the weights between feature maps.

As one embodiment, a parameter group adopted by the first decode comprises at least one parameter in the first function in the present application.

As one embodiment, a parameter group adopted by the first decode comprises at least one of the quantity of decoding layer groups, the quantity of decoding layers, the size of input parameters of the decoding layers, or the size of output parameters of the decoding layers.

As one embodiment, a parameter group adopted by the first decode comprises at least one of the quantity of decoding layer groups, the quantity of decoding layers, the size of input parameters of the decoding layers, the size of output parameters of the decoding layers, the threshold of an activation function, the size of a convolution kernel, the stride of a convolution kernel, or the weights between feature maps.

As one embodiment, any one of the P parameter groups comprises at least one parameter in the first function in the present application.

As one embodiment, any one of the P parameter groups comprises at least one of the quantity of decoding layer groups, the quantity of decoding layers, the size of input parameters of the decoding layers, or the size of output parameters of the decoding layers.

As one embodiment, any one of the P parameter groups comprises at least one of the quantity of decoding layer groups, the quantity of decoding layers, the size of input parameters of the decoding layers, the size of output parameters of the decoding layers, the threshold of an activation function, the size of a convolution kernel, the stride of the convolution kernel, or the weights between feature maps.

As one embodiment, a parameter group adopted by the first decode is obtained by training.

As one embodiment, a parameter group adopted by the first decode comprises one parameter or more parameters.

As one embodiment, a parameter group adopted by the first decode is used for describing the first decode.

As one embodiment, a parameter group adopted by the first decode is used for describing a model adopted by the first decode.

As one embodiment, a parameter group adopted by the first decode comprises a model adopted by the first decode.

As one embodiment, a parameter group adopted by the first decode is a model adopted by the first decode.

As one embodiment, a model adopted by the first decode is one CSI reconstruction model.

As one embodiment, any one of the J parameter groups corresponds to one of the P parameter groups.

As one embodiment, J is equal to P, and the J parameter groups correspond one-to-one with the P parameter groups.

As one embodiment, the meaning of "one of the J parameter groups corresponds to one of the P parameter groups" comprises: one of the P parameter groups is used for an inverse operation of the corresponding one of the J parameter groups.

As one embodiment, the meaning of "one of the J parameter groups corresponds to one of the P parameter groups" comprises: one of the P parameter groups and one of the J parameter groups corresponding to it are obtained by training based on the same training dataset.

As one embodiment, when the first code adopts a first parameter group among the J parameter groups to generate the first channel information, the first decode adopts one of the P parameter groups corresponding to the first parameter group to generate the first reconstructed channel information; and the first parameter group is one of the J parameter groups.

As one embodiment, a parameter group adopted by the first code corresponds to a parameter group adopted by the first decode.

As one embodiment, a parameter group adopted by the first decode depends on a parameter group adopted by the first code.

As one embodiment, the first decode adopts one of the P parameter groups corresponding to the parameter group adopted by the first code to generate the first reconstructed channel information.

As one embodiment, P is greater than 1, and there exist two of the J parameter groups that correspond to two of the P parameter groups respectively.

As one embodiment, a parameter group adopted by the first code is one of J parameter groups, J being a positive integer greater than 1; a parameter group adopted by the first decode is one of P parameter groups, P being a positive integer; any one of the J parameter groups corresponds to one of the P parameter groups; and the parameter group adopted by the first decode is one of the P parameter groups corresponding to the parameter group adopted by the first code.

As one embodiment, training types of the J parameter groups are all the same.

As one embodiment, a training type of at least one of the J parameter groups describes how the first code is trained.

As one embodiment, a training type of at least one of the J parameter groups describes how the first code and the first decode are trained.

As one embodiment, the training type of at least one of the J parameter groups is a Type 1.

As one embodiment, the training type of at least one of the J parameter groups is a Type 2.

As one embodiment, the training type of at least one of the J parameter groups is a Type 3.

As one embodiment, the training type of at least one of the J parameter groups is one type in a first type set.

As one embodiment, the first type set comprises a plurality of training types.

As one embodiment, the first type set comprises at least one of a type 1, a type 2, or a type 3.

As one embodiment, the first type set comprises at least two of a type 1, a type 2, or a type 3.

As one embodiment, the first type set comprises a type 1, a type 2, and a type 3.

As one embodiment, the first type set comprises a type 1 and a type 2.

As one embodiment, the first type set comprises a type 2 and a type 3.

As one embodiment, the type 1 comprises: the first code and the first decode are jointly trained, or generated, or maintained in only one of the first node or the second node.

As one embodiment, the type 2 comprises: the first code and the first decode are jointly trained, or generated, or maintained in both the first node and the second node.

As one embodiment, the type 3 comprises: the first code and the first decode are separately or independently trained, or generated, or maintained in the first node and the second node, respectively.

As one embodiment, the type 1 comprises: the J parameter groups and the P parameter groups are jointly trained, or generated, or maintained in only one of the first node or the second node.

As one embodiment, the type 2 comprises: the J parameter groups and the P parameter groups are jointly trained, or generated, or maintained in both the first node and the second node.

As one embodiment, the type 3 comprises: the J parameter groups and the P parameter groups are separately or independently trained, or generated, or maintained in the first node and the second node respectively.

### Embodiment 15

Embodiment 15 illustrates a schematic diagram of an artificial intelligence processing system according to one embodiment of the present application, as shown in FIG. 15. FIG. 15 comprises a first processing machine, a second processing machine, a third processing machine, and a fourth processing machine.

In Embodiment 15, the first processing machine sends a first dataset to the second processing machine, the second processing machine generates a target first-type parameter group according to the first dataset, the second processing machine sends the generated target first-type parameter group to the third processing machine, and the third processing machine processes a second dataset using the target first-type parameter group to obtain a first-type output, and then sends the first-type output to the fourth processing machine.

As one embodiment, the third processing machine sends first-type feedback to the second processing machine, and the first-type feedback is used for triggering for recalculating or updating the target first-type parameter group.

As one embodiment, the fourth processing machine sends second-type feedback to the first processing machine, and the second-type feedback is used for generating the first dataset or the second dataset, or the second-type feedback is used for triggering for sending the first dataset or the second dataset.

As one embodiment, the first dataset is a training dataset, the second dataset is inference data, and the second processing machine is used for training a model.

As one embodiment, the trained model is described by the target first-type parameter set.

As one embodiment, the target first-type parameter group comprises the trained model.

As one embodiment, the target first-type parameter group is the trained model.

As one embodiment, the third processing constructs a model according to the target first-type parameter group, then inputs the second dataset into the constructed model to obtain the first-type output, and then sends the first-type output to the fourth processing machine.

As one embodiment, the third processing machine calculates an error between the first-type output and actual data to determine the performance of the trained model; and the actual data is data received after the second dataset and transmitted by the first processing machine.

The above embodiment is particularly suitable for prediction-related reporting.

As one embodiment, the third processing machine recovers a reference dataset according to the first-type output, and an error between the reference dataset and the second dataset is used for generating the first-type feedback.

As one embodiment, the recovery of the reference dataset adopts an inverse operation similar to that of the target first-type parameter group generally.

As one embodiment, the first-type feedback is used for reflecting the performance of the trained model; and when the performance of the trained model fails to meet requirements, the second processing machine recalculates the target first-type parameter group.

Typically, the performance of the trained model is considered to fail to meet requirements when the error is excessively large or no update has been made for an excessively long time.

As one embodiment, the first dataset comprises at least one of the J1 training datasets in the present application.

As one embodiment, the first dataset is one of the J1 training datasets in the present application.

As one embodiment, the first dataset is the J1 training datasets in the present application.

As one embodiment, the first dataset comprises at least one of the first group of training datasets in the present application.

As one embodiment, the first dataset comprises at least one of the second group of training datasets in the present application.

As one embodiment, the first dataset comprises one of the first group of training datasets in the present application.

As one embodiment, the first dataset comprises one of the second group of training datasets in the present application.

As one embodiment, the first dataset comprises the first group of training datasets in the present application.

As one embodiment, the first dataset comprises the second group of training datasets in the present application.

As one embodiment, the second dataset comprises the first input channel information in the present application.

As one embodiment, the first processing machine generates the first dataset according to the measurement on a first wireless signal, the first wireless signal comprising a downlink RS.

As one embodiment, the first processing machine generates the second dataset according to the measurement on a second wireless signal, the second wireless signal comprising at least one RS resource in the first RS resource set in the present application.

As one embodiment, the third processing machine comprises the first code of the present application, and the generation of the first-type output is executed by the first code.

As one embodiment, the target first-type parameter group is a parameter group adopted by the first code in the present application.

As one embodiment, the target first-type parameter group is one of the J parameter groups in the present application.

As one embodiment, the third processing machine comprises the first reference decode in the present application, the input of the first reference decode comprises the first-type output, the output of the first reference decode comprises a reference dataset, and the reference dataset comprises a first monitoring output in the present application.

As one embodiment, the fourth processing machine comprises the first decode in the present application, the input of the first decode comprises the first-type output, or the first-type output is used for generating an input of the first decode.

As one embodiment, the second-type feedback comprises an input of the first decode in the present application.

As one embodiment, an output of the first decode in the present application is used for generating the second-type feedback.

As one embodiment, the second-type feedback comprises the first reconstructed channel information in the present application.

As one embodiment, the first reconstructed channel information in the present application is used for generating the second-type feedback.

As one embodiment, the fourth processing machine comprises the first reference code in the present application.

As one embodiment, the second-type feedback comprises the second monitoring output in the present application.

As one embodiment, the second monitoring output in the present application is used for generating the second-type feedback.

As one embodiment, the first-type output comprises the first channel information in the present application.

As one embodiment, the first processing machine belongs to a first node.

As one embodiment, the third processing machine belongs to a first node.

As one embodiment, the fourth processing machine belongs to a second node.

As one embodiment, the second processing machine belongs to a first node.

The above embodiment avoids transmitting the first dataset to the second node.

As one embodiment, the second processing machine belongs to a second node.

The above embodiment reduces the complexity of the first node.

As one embodiment, the third processing machine belongs to a second node, and the first node reports the target first-type parameter group to the second node.

As one embodiment, the first processing machine belongs to the first receiver in the present application.

As one embodiment, the second processing machine belongs to the first receiver in the present application.

As one embodiment, the second processing machine belongs to the first transmitter in the present application.

As one embodiment, the second processing machine belongs to at least one of the first receiver or the first transmitter in the present application.

As one embodiment, the second processing machine belongs to the second receiver in the present application.

As one embodiment, the second processing machine belongs to the second transmitter in the present application.

As one embodiment, the second processing machine belongs to at least one of the second receiver or the second transmitter.

As one embodiment, the third processing machine belongs to the first receiver in the present application.

As one embodiment, the third processing machine belongs to the first transmitter in the present application.

As one embodiment, the third processing machine belongs to at least one of the first receiver or the first transmitter.

As one embodiment, the fourth processing machine belongs to the second receiver in the present application.

As one embodiment, the fourth processing machine belongs to the second transmitter in the present application.

As one embodiment, the fourth processing machine belongs to at least one of the second receiver or the second transmitter.

### Embodiment 16

Embodiment 16 illustrates a schematic diagram of one code according to one embodiment of the present application, as shown in FIG. 16. In FIG. 16, the one code comprises P1 coding layers, namely, coding layers #1, #2, ..., #P1.

As one embodiment, the one code is the first code of the present application.

As one embodiment, the one code is the first reference code of the present application.

As one embodiment, P1 is equal to 1.

As one embodiment, P1 is greater than 1.

As one embodiment, the P1 coding layers comprise at least one of a fully connected layer, a convolutional layer, and a pooling layer.

As one embodiment, P1 is 2, namely, the P1 coding layers comprise a coding layer #1 and a coding layer #2, the coding layer #1 and the coding layer #2 being a convolutional layer and a fully connected layer respectively; in the convolutional layer, at least one convolution kernel is used for convolving the first input channel information to generate a corresponding feature map, and at least one feature map output by the convolutional layer is reshaped into one vector to be input to the fully connected layer; and the fully connected layer converts the one vector into the first channel information in the present application. For a more detailed description, please refer to CNN-related technical literature, such as Chao-Kai Wen, Deep Learning for Massive MIMO CSI Feedback, IEEE WIRELESS COMMUNICATIONS LETTERS, VOL. 7, NO. 5, OCTOBER 2018, etc.

As one embodiment, P1 is 3, namely, the P1 coding layers comprise a fully connected layer, a convolutional layer, and a pooling layer.

### Embodiment 17

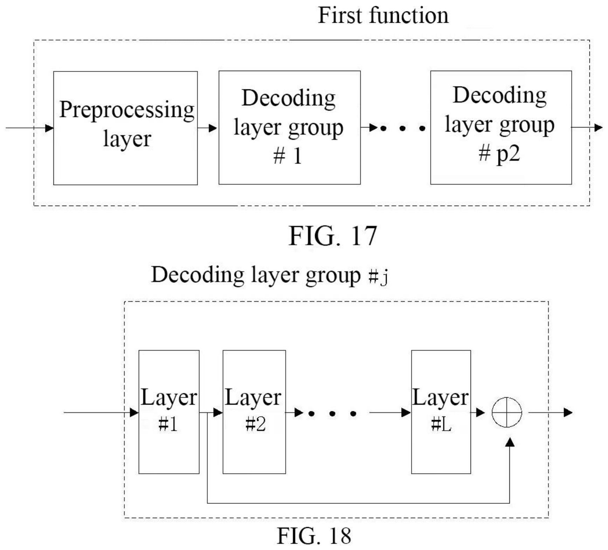

Embodiment 17 illustrates a schematic diagram of a first function according to one embodiment of the present application, as shown in FIG. 17. In FIG. 17, the first function comprises a preprocessing layer and P2 decoding layer groups, namely, decoding layer groups #1, #2, ..., #P2, each decoding layer group comprising at least one decoding layer. The preprocessing layer is optional.

As one embodiment, the structure of the first function is applied to the first decode in the present application.

As one embodiment, the structure of the first function is applied to the first reference decode in the present application.

As one embodiment, the preprocessing layer is a fully connected layer, and the size of the first channel information is expanded to the size of the first input channel information.

As one embodiment, the structures of any two of the P2 decoding layer groups are the same, and the structure comprises the quantity of decoding layers comprised, the size of input parameters and the size of output parameters of each decoding layer comprised, etc.

As one embodiment, the first node indicates P2 and the structure of the decoding layer group to the second node.

As one embodiment, the second node indicates P2 and the structure of the decoding layer group to the first node.

As one embodiment, the first node indicates other parameters of the first function to the second node.

As one embodiment, the second node indicates other parameters of the first function to the first node.

As one embodiment, the other parameters comprise at least one of the threshold of an activation function, the size of a convolution kernel, the stride of the convolution kernel, and the weights between feature maps.

### Embodiment 18

Embodiment 18 illustrates a schematic diagram of one decoding layer group according to one embodiment of the present application, as shown in FIG. 18. In FIG. 18, the decoding layer group #j comprises L layers, namely, layers #1, #2, ..., #L; and the decoding layer group is any one of the P2 decoding layer groups.

As one embodiment, L is 4, the first layer of the L layers is an input layer, and the last three layers of the L layers are convolutional layers. For more detailed descriptions, please refer to CNN-related technical literature, such as Chao-Kai Wen, Deep Learning for Massive MIMO CSI Feedback, IEEE WIRELESS COMMUNICATIONS LETTERS, VOL. 7, NO. 5, OCTOBER 2018, etc.

As one embodiment, the L layers comprise at least one convolutional layer and one pooling layer.

### Embodiment 19

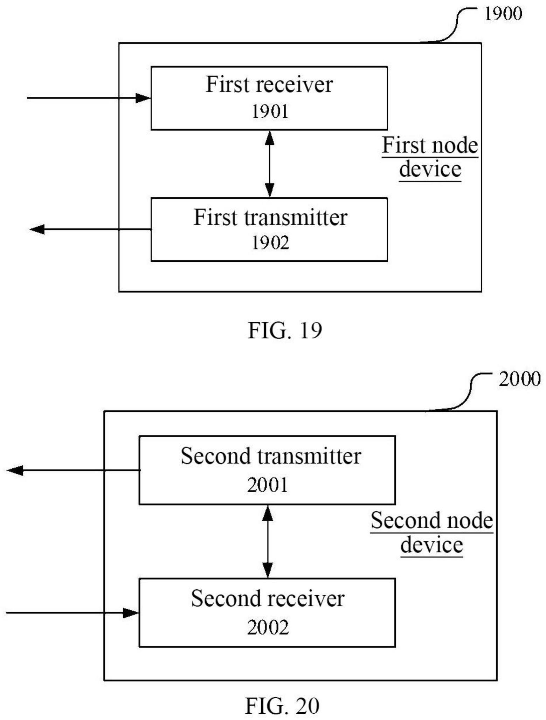

Embodiment 19 illustrates a structural block diagram of a processing apparatus used in a first node device according to one embodiment of the present application, as shown in FIG. 19. In FIG. 19, the processing apparatus 1900 in the first node device comprises a first receiver 1901 and a first transmitter 1902.

As one embodiment, the first node device is user equipment.

As one embodiment, the first receiver 1901 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1902 comprises at least one of {an antenna 452, a transmitting device 454, a transmitting processor 468, a multi-antenna transmitting processor 457, a controller/processor 459, a memory 460, and a data source 467} in Embodiment 4.

A first receiver 1901 receives a first information block, the first information block being used for indicating a first RS resource set, and the first RS resource set comprising one or more RS resources; and
a first transmitter 1902 sends first channel information.

In Embodiment 19, a first code is used for generating the first channel information, and the measurement for at least one RS resource in the first RS resource set is used for generating the input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

As one embodiment, any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with only one of the first identifier or the second identifier, or the first parameter group is associated with the first identifier and the second identifier.

As one embodiment, two of the J parameter groups are obtained by training based on the same training dataset, and the two of the J parameter groups that are obtained by training based on the same training dataset are associated with the first identifier and the second identifier respectively.

As one embodiment, the second parameter group and the third parameter group are obtained by training based on two different training datasets respectively, and the second parameter group and the third parameter group are two of the J parameter groups; and the two training datasets on which the second parameter group and the third parameter group are based correspond to at least one RS resource in the same RS resource set.

As one embodiment, the first channel information is associated with only one or both of the first identifier or the second identifier, the parameter group adopted by the first code depends on an identifier associated with the first channel information, and the identifier associated with the first channel information comprises only one or both of the first identifier or the second identifier.

As one embodiment, the training of at least one of the J parameter groups is executed at the first node, or the training of at least one of the J parameter groups is executed by the sender of the first information block, or an executor of the training of at least one of the J parameter groups depends on a training type of at least one of the J parameter groups.

As one embodiment, the parameter group adopted by the first code depends on the first RS resource set.

As one embodiment, it comprises:
the first receiver 1901 receiving a second information block,
wherein an identifier with which the parameter group adopted by the first code is associated comprises only one or both of the first identifier or the second identifier, and the second information block is used for indicating the identifier with which the parameter group adopted by the first code is associated.

### Embodiment 20

Embodiment 20 illustrates a structural block diagram of a processing apparatus used in a second node device according to one embodiment of the present application, as shown in FIG. 20. In FIG. 20, the processing apparatus 2000 in the second node device comprises a second transmitter 2001 and a second receiver 2002.

As one embodiment, the second node device is a base station device.

As one embodiment, the second transmitter 2001 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 2002 comprises at least one of {an antenna 420, a receiving device 418, a receiving processor 470, a multi-antenna receiving processor 472, a controller/processor 475, and a memory 476} in Embodiment 4.

A second transmitter 2001 sends a first information block, the first information block being used for indicating a first RS resource set, and the first RS resource set comprising one or more RS resources; and
a second receiver 2002 receives first channel information.

In Embodiment 20, a first code is used for generating the first channel information, and the measurement for at least one RS resource in the first RS resource set is used for generating the input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

As one embodiment, any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with only one of the first identifier or the second identifier, or the first parameter group is associated with the first identifier and the second identifier.

As one embodiment, two of the J parameter groups are obtained by training based on the same training dataset, and the two of the J parameter groups that are obtained by training based on the same training dataset are associated with the first identifier and the second identifier respectively.

As one embodiment, the second parameter group and the third parameter group are obtained by training based on two different training datasets respectively, and the second parameter group and the third parameter group are two of the J parameter groups; and the two training datasets on which the second parameter group and the third parameter group are based correspond to at least one RS resource in the same RS resource set.

As one embodiment, the first channel information is associated with only one or both of the first identifier or the second identifier, the parameter group adopted by the first code depends on an identifier associated with the first channel information, and the identifier associated with the first channel information comprises only one or both of the first identifier or the second identifier.

As one embodiment, the training of at least one of the J parameter groups is executed by the recipient of the first information block, or the training of at least one of the J parameter groups is executed at the second node, or an executor of the training of at least one of the J parameter groups depends on a training type of at least one of the J parameter groups.

As one embodiment, the parameter group adopted by the first code depends on the first RS resource set.

As one embodiment, it comprises:
the second transmitter 2001 sends a second information block,
wherein an identifier with which the parameter group adopted by the first code is associated comprises only one or both of the first identifier or the second identifier, and the second information block is used for indicating the identifier with which the parameter group adopted by the first code is associated.

Those skilled in the art will appreciate that all or some of the steps in the above method may be implemented by instructing relevant hardware by a program, and the program can be stored in a computer-readable storage medium, such as a read-only memory, a hard disk or an optical disk. Optionally, all or some of the steps of the above embodiments may also be implemented using one or more integrated circuits. Correspondingly, each module unit in the above embodiment may be implemented either in a hardware form or as software functional modules. The present application is not limited to any specific combination form of hardware and software. The user equipment, terminals and UE in the present application include but are not limited to drones, communication modules on drones, remote-controlled aircrafts, airplanes, small aircrafts, mobile phones, tablet computers, laptops, vehicle-mounted communication devices, radio sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system equipment in the present application includes but is not limited to Macrocellular base stations, Microcellular base stations, Femtocells, relay base stations, gNB (NR node B) NR node B, TRPs (Transmitter Receiver Points) and other wireless communication devices.

The above is only a preferred embodiment of the present application and is not used to limit the scope of protection of the present application. Any changes and modifications made based on the embodiments described in the specification, if similar partial or full technical effects can be obtained, should be deemed obvious and belong to the scope of protection of the present invention.

## Claims

1. A first node for wireless communication, comprising:
a first receiver receiving a first information block, the first information block being used for indicating a first RS resource set, and the first RS resource set comprising one or more RS resources; and
a first transmitter sending first channel information,
wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

2. The first node according to claim 1, wherein any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with only one of the first identifier or the second identifier, or the first parameter group is associated with the first identifier and the second identifier.

3. The first node according to claim 1 or 2, wherein two of the J parameter groups are obtained by training based on the same training dataset, and the two of the J parameter groups that are obtained by training based on the same training dataset are associated with the first identifier and the second identifier respectively.

4. The first node according to any one of claims 1 to 3, wherein a second parameter group and a third parameter group are obtained by training based on two different training datasets respectively, and the second parameter group and the third parameter group are two of the J parameter groups; and the two training datasets on which the second parameter group and the third parameter group are based correspond to at least one RS resource in the same RS resource set.

5. The first node according to any one of claims 1 to 4, wherein the first channel information is associated with only one or both of the first identifier or the second identifier, the parameter group adopted by the first code depends on identifier associated with the first channel information, and the identifier associated with the first channel information comprises only one or both of the first identifier or the second identifier.

6. The first node according to any one of claims 1 to 5, wherein the training of at least one of the J parameter groups is executed at the first node, or the training of at least one of the J parameter groups is executed by a sender of the first information block, or an executor of the training of at least one of the J parameter groups depends on a training type of at least one of the J parameter groups.

7. The first node according to any one of claims 1 to 6, wherein the parameter group adopted by the first code depends on the first RS resource set.

8. The first node according to any one of claims 1 to 7, comprising:
the first receiver receiving a second information block,
wherein an identifier with which the parameter group adopted by the first code is associated comprises only one or both of the first identifier or the second identifier, and the second information block is used for indicating the identifier with which the parameter group adopted by the first code is associated.

9. A second node for wireless communication, comprising:
a second transmitter sending a first information block, the first information block being used for indicating a first RS resource set, and the first RS resource set comprising one or more RS resources; and
a second receiver receiving first channel information,
wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

10. The second node according to claim 9, wherein any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with only one of the first identifier or the second identifier, or the first parameter group is associated with the first identifier and the second identifier.

11. The second node according to claim 9 or 10, wherein two of the J parameter groups are obtained by training based on the same training dataset, and the two parameter groups obtained by training based on the same training dataset in the J parameter groups are associated with the first identifier and the second identifier respectively.

12. The second node according to any one of claims 9 to 11, wherein a second parameter group and a third parameter group are obtained by training based on two different training datasets respectively, and the second parameter group and the third parameter group are two of the J parameter groups; and the two training datasets on which the second parameter group and the third parameter group are based correspond to at least one RS resource in the same RS resource set.

13. The second node according to any one of claims 9 to 12, wherein the first channel information is associated with only one or both of the first identifier or the second identifier, the parameter group adopted by the first code depends on an identifier associated with the first channel information, and the identifier associated with the first channel information comprises only one or both of the first identifier or the second identifier.

14. The second node according to any one of claims 9 to 13, wherein the training of at least one of the J parameter groups is executed by a recipient of the first information block, or the training of at least one of the J parameter groups is executed at the second node, or an executor of the training of at least one of the J parameter groups depends on a training type of at least one of the J parameter groups.

15. The second node according to any one of claims 9 to 14, wherein the parameter group adopted by the first code depends on the first RS resource set.

16. The second node according to any one of claims 9 to 15, comprising:
the second transmitter sending a second information block,
wherein an identifier with which the parameter group adopted by the first code is associated comprises only one or both of the first identifier or the second identifier, and the second information block is used for indicating the identifier with which the parameter group adopted by the first code is associated.

17. A method used in a first node for wireless communication, comprising:
receiving a first information block, the first information block being used for indicating a first RS resource set, and the first RS resource set comprising one or more RS resources; and
sending first channel information,
wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

18. The method according to claim 17, wherein any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with the first identifier and the second identifier.

19. The method according to claim 17 or 18, wherein two of the J parameter groups are obtained by training based on the same training dataset, and the two parameter groups obtained by training based on the same training dataset in the J parameter groups are associated with the first identifier and the second identifier respectively.

20. The method according to any one of claims 17 to 19, wherein a second parameter group and a third parameter group are obtained by training based on two different training datasets respectively, and the second parameter group and the third parameter group are two of the J parameter groups; and the two training datasets on which the second parameter group and the third parameter group are based correspond to at least one RS resource in the same RS resource set.

21. The method according to any one of claims 17 to 20, wherein the first channel information is associated with only one or both of the first identifier or the second identifier, the parameter group adopted by the first code depends on an identifier associated with the first channel information, and the identifier associated with the first channel information comprises only one or both of the first identifier or the second identifier.

22. The method according to any one of claims 17 to 21, wherein the training of at least one of the J parameter groups is executed at the first node, or the training of at least one of the J parameter groups is executed by a sender of the first information block, or an executor of the training of at least one of the J parameter groups depends on a training type of at least one of the J parameter groups.

23. The method according to any one of claims 17 to 22, wherein the parameter group adopted by the first code depends on the first RS resource set.

24. The method according to any one of claims 17 to 23, comprising:
receiving a second information block,
wherein an identifier with which the parameter group adopted by the first code is associated comprises only one or both of the first identifier or the second identifier, and the second information block is used for indicating the identifier with which the parameter group adopted by the first code is associated.

25. A method used in a second node for wireless communication, comprising:
sending a first information block, the first information block being used for indicating a first RS resource set, and the first RS resource set comprising one or more RS resources; and
receiving first channel information,
wherein a first code is used for generating the first channel information, and a measurement for at least one RS resource in the first RS resource set is used for generating an input of the first code; a parameter group adopted by the first code is one of J parameter groups, J being a positive integer greater than 1; the J parameter groups are obtained by training; and at least one of the J parameter groups is associated with only one or both of a first identifier or a second identifier, and the first identifier is different from the second identifier.

26. The method according to claim 25, wherein any one of the J parameter groups is obtained by training based on one of J1 training datasets, J1 being a positive integer; a first training dataset is one of the J1 training datasets, only a first parameter group among the J parameter groups is obtained by training based on the first training dataset, and the first parameter group is one of the J parameter groups; and the first parameter group is associated with the first identifier and the second identifier.

27. The method according to claim 25 or 26, wherein two of the J parameter groups are obtained by training based on the same training dataset, and the two parameter groups obtained by training based on the same training dataset in the J parameter groups are associated with the first identifier and the second identifier respectively.

28. The method according to any one of claims 25 to 27, wherein a second parameter group and a third parameter group are obtained by training based on two different training datasets respectively, and the second parameter group and the third parameter group are two of the J parameter groups; and the two training datasets on which the second parameter group and the third parameter group are based correspond to at least one RS resource in the same RS resource set.

29. The method according to any one of claims 25 to 28, wherein the first channel information is associated with only one or both of the first identifier or the second identifier, the parameter group adopted by the first code depends on an identifier associated with the first channel information, and the identifier associated with the first channel information comprises only one or both of the first identifier or the second identifier.

30. The method according to any one of claims 25 to 29, wherein the training of at least one of the J parameter groups is executed at the first node, or the training of at least one of the J parameter groups is executed by a sender of the first information block, or an executor of the training of at least one of the J parameter groups depends on a training type of at least one of the J parameter groups.

31. The method according to any one of claims 25 to 30, wherein the parameter group adopted by the first code depends on the first RS resource set.

32. The method according to any one of claims 25 to 31, comprising:
sending a second information block,
wherein an identifier with which the parameter group adopted by the first code is associated comprises only one or both of the first identifier or the second identifier, and the second information block is used for indicating the identifier with which the parameter group adopted by the first code is associated.
